Europäisches Patentamt

(19) European Patent Office

Office européen des brevets

(11) Numéro de publication : **0 340 095 B1**

(12) **FASCICULE DE BREVET EUROPEEN**

(45) Date de publication du fascicule du brevet :
08.01.92 Bulletin 92/02

(51) Int. Cl.⁵ : **B64C 27/51**

(21) Numéro de dépôt : **89401161.8**

(22) Date de dépôt : **24.04.89**

(54) **Tête de rotor de giravion à tirants interpales de rappel élastique avec amortissement incorporé.**

(30) Priorité : 29.04.88 FR 8805816

(43) Date de publication de la demande :
02.11.89 Bulletin 89/44

(45) Mention de la délivrance du brevet :
08.01.92 Bulletin 92/02

(84) Etats contractants désignés :
DE GB IT

(56) Documents cités :
DE-A- 3 148 903
FR-A- 1 465 027
FR-A- 2 125 150
FR-A- 2 486 492
FR-A- 2 584 995
US-A- 3 361 216
US-A- 4 568 245

(73) Titulaire : AEROSPATIALE Société Nationale
Industrielle
37, Boulevard de Montmorency
F-75781 Paris Cédex 16 (FR)

(72) Inventeur : Guimbal, Bruno
Rue du Château Moustier
F-13220 Châteauneuf-les-Martigues (FR)

(74) Mandataire : Phélip, Bruno et al
c/o Cabinet Harlé & Phélip 21, rue de La
Rochefoucauld
F-75009 Paris (FR)

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne les rotors, en particulier les rotors d'aérodynes à voilures tournantes dont la tête articulée est équipée d'un dispositif de liaison interpale en traînée comportant des tirants de rappel élastique avec amortissement incorporé, qui sont en nombre égal au nombre des pales du rotor, et qui sont installés chacun entre deux pales voisines ou adjacentes, ou entre les organes de liaison de deux pales voisines au moyeu.

L'invention se rapporte en particulier aux rotors principaux ou sustentateurs d'hélicoptères, dont la tête est équipée d'un dispositif de liaison interpale tel que défini ci-dessus, et dont chaque pale est avantageusement reliée au moyeu par des moyens de liaison et d'articulation comprenant avantageusement une articulation unique de battement, de traînée et de pas.

Dans le meilleur mode de réalisation de la tête de rotor à laquelle se rapporte l'invention, l'unique articulation de battement, de traînée et de pas que comprennent les moyens d'articulation de chaque pale du rotor au moyeu, est avantageusement une articulation du type communément appelé "butée sphérique lamifiée", comprenant, entre deux armatures rigidement liées l'une au moyeu et l'autre au pied de la pale ou à un organe, tel qu'une chape ou un manchon, de liaison du pied de pale au moyeu, un empilement alterné et en forme de portions de sphère, de coupelles rigides et de lames d'un matériau élastique ayant un centre commun et assurant simultanément, d'une part, la transmission au moyeu des efforts centrifuges provenant de la pale par compression axiale de la butée lamifiée, et, d'autre part, les mouvements angulaires de battement, de traînée et de pas de la pale par rapport au moyeu par déformation des lames sphériques élastiques de la butée lamifiée autour de leur centre commun.

Pour amortir les oscillations angulaires des pales en traînée, on a déjà proposé de nombreuses réalisations de contre-fiches de rappel élastique à amortissement incorporé, de type visco-élastique, hydro-élastique ou autres, appelées parfois encore amortisseurs de traînée des pales ou adaptateurs de fréquences de traînée des pales, qui sont interposées entre la jante ou le bord périphérique du moyeu du rotor, auquel chaque pale peut être reliée par des moyens comprenant une articulation élastomérique et sphérique unique de traînée, de battement et de pas, et le pied de pale ou un organe de liaison du pied de pale au moyeu, tel qu'un manchon ou une chape de liaison. Des exemples de telles contre-fiches sont décrits dans les brevets français N° 2528382, 2573829 et 2592696.

Par rapport à ce type bien connu de montage, dans lequel le rappel élastique et l'amortissement des mouvements angulaires de chaque pale en traînée sont assurés simultanément mais indépendamment des autres pales, en raison de l'attache sur le moyeu de l'une des deux articulations d'extrémité de la contre-fiche, dont l'autre articulation d'extrémité est liée à la pale, le disposition interpale de tirants de rappel élastique avec amortissement incorporé est plus avantageuse au niveau de l'architecture générale d'installation, de la masse, de l'encombrement, de la traînée parasite du rotor et également de la fiabilité, en raison essentiellement du fait qu'elle permet de supprimer sur le moyeu lui-même toute attache pour le rappel élastique et l'amortissement des pales entraînées.

En effet, les contre-fiches reliant les pales au moyeu présentent des manques de fiabilité et de résistance, car elles sont sollicitées par des efforts qui leur sont transmis par de faibles bras de levier au niveau des rotules d'articulation de chaque contre-fiche d'une part à la pale et d'autre part au moyeu, de sorte que ces articulations supportent des oscillations angulaires et des efforts importants. De plus, la chape d'attache de la contre-fiche sur le moyeu doit être fixée dans une zone du moyeu qui est la plus critique, en particulier dans le cas de réalisation de moyeux en matériau composite, notamment de mâts-moyeux tubulaires et intégrés. Il se pose en outre un problème d'encombrement, lié aux problèmes d'implantation et de dimensionnement qui se posent en raison de la nécessité de prévoir non seulement la chape d'attache de la contre-fiche sur le moyeu, mais également un levier de commande de pas pour la pale correspondante, et dans cette même zone. Il en résulte également que le rayon de l'attache de la pale par son pied sur un manchon ou une chape de liaison au moyeu est grand, surtout si l'on veut pouvoir replier la pale vers l'arrière. D'une manière générale, la place disponible à proximité du moyeu est trop réduite, pour pouvoir loger des contre-fiches, ou amortisseurs de traînée, ou encore adaptateurs de fréquence en traînée, d'une grande raideur et subissant des efforts importants, et donc d'un dimensionnement et d'une masse importants occasionnant simultanément une augmentation non négligeable de la traînée aérodynamique d'ensemble du rotor, sans oublier que les contre-fiches à amortissement hydro-élastique qui permettent de rechercher un compromis acceptable entre une raideur modérée et un amortissement élevé, posent des problèmes spécifiques de fiabilité et d'étanchéité, au niveau de l'amortisseur hydraulique.

C'est pour toutes ces raisons que différents dispositifs de liaison interpale par des tirants élastiques intégrant éventuellement un amortissement ont été proposés depuis longtemps, notamment dans les brevets français 948640, 1465027, 2125150 et dans les brevets des Etats-Unis d'Amérique N° 2494985 et 3302726.

L'utilisation de tirants interpales de rappel élastique avec amortissement incorporé permet de régler les fréquences propres et l'amortissement en traînée des pales, entre elles, et non individuellement par rapport au moyeu, en s'opposant à des oscillations de traînée déphasées des pales, sans s'opposer à des oscillations de traînée en phase, lesquelles sont libres, ce qui a pour effet de déplacer les modes propres de transmission, et d'éliminer tout amortissement pour ce type d'oscillations. Un autre effet d'un dispositif de liaison interpale à tirants de rappel élastique avec amortissement incorporé sur le fonctionnement de la tête de rotor est que les pales prennent une position d'équilibre en traînée comme si elles étaient reliées chacune au moyeu et librement articulées sur ce dernier. Pour le résonance-sol, le premier mode vibratoire en traînée n'est influant que par le balourd tournant créé par le déphasage des pales entre elles, et non par leur mouvement individuel par rapport au moyeu.

Ce principe de fonctionnement d'un dispositif de liaison interpale est confirmé dans le brevet français 1465027, relatif à un rotor d'hélicoptère à moyeu rigide et à pales articulées. Sur ce rotor, chaque pale effectue ses oscillations angulaires de traînée autour d'un pivot, parallèle à l'axe de rotation du moyeu, et sur l'extrémité libre d'un bras radial du moyeu rigide, et chaque pale est raccordée à chacune des deux pales voisines du rotor par un tirant ou dispositif de raccordement, comprenant des moyens élastiques et des moyens amortisseurs. Chaque tirant s'articule, par l'une de ses extrémités, sur une bride de liaison d'une pale au bras radial correspondant du moyeu, et dans une zone de cette bride qui est en avant de l'axe de changement de pas de cette pale par rapport au sens de rotation du rotor. L'autre extrémité du tirant est également articulée sur la bride de liaison de la pale immédiatement précédente au bras correspondant du moyeu, mais dans une zone de cette bride qui est par contre située en arrière de l'axe de changement de pas de cette pale précédente. Chaque bride de liaison est de forme générale triangulaire, liée rigidement à la pale correspondante par un côté du triangle, et pivotée sur le bras radial correspondant du moyeu par le sommet opposé à ce côté, tandis que la bride de liaison est articulée par chacun des deux autres sommets du triangle sur l'un des deux tirants articulés à cette bride, de sorte que les articulations sur les tirants sont décalées au maximum, compte-tenu des dimensions de la bride de liaison, l'une vers l'avant et l'autre vers l'arrière, par rapport à l'axe de changement de pas de la pale correspondante. De la sorte, les articulations des deux extrémités d'un tirant et les articulations sur le moyeu des deux pales raccordées l'une à l'autre par ce tirant, forment un quadrilatère articulé et déformable, qui est un parallélogramme lorsque les oscillations angulaires de traînée des pales sont nulles ou en phase.

Le brevet français 948640 décrit un rotor d'hélicoptère sur lequel chaque pale est liée par son pied à un support de pale monté pivotant autour d'un axe de traînée, sur une pièce radiale, articulée à pivotement sur le moyeu du rotor autour d'un axe de battement situé radialement à l'intérieur de l'axe de traînée, par rapport au centre du moyeu et le long de l'axe de changement de pas de la pale, dont le pied est accouplé à un levier de commande du pas de cette pale. Chaque support de pale porte deux pattes latérales, qui s'étendent dans le plan de rotation des pales et en saillie à la fois radialement vers l'extérieur et l'une vers l'avant et l'autre vers l'arrière de l'axe de pas de la pale, par rapport au sens de rotation du rotor, et chacune de ces deux pattes est conformée à son extrémité, en oeil à rotule. Des tirants s'étendent chacun entre deux pales voisines, à chacune desquelles le tirant correspondant est relié par un joint universel, qui l'articule sur la patte latérale du côté correspondant sur le support de la pale correspondante. Chaque tirant comprend deux tubes emmanchés partiellement et télescopiquement l'un dans l'autre, et dont l'extrémité libre de chacun porte une rotule retenue dans l'oeil à rotule de patte latérale du côté correspondant, sur le support de l'une des deux pales reliées l'une à l'autre par ce tirant, et les deux tubes de ce dernier sont chacun solidaires de l'une de deux brides radiales, par rapport à l'axe commun de tubes, et qui sont écartées l'une de l'autre et entre lesquelles est intercalé au moins un bloc, un manchon ou une bague en matière élastique tel que du caoutchouc. Chaque joint à rotule autorise un mouvement universel limité entre le tirant et le support de pale que ce joint à rotule articule l'un à l'autre, et les éléments en caoutchouc sont conçus pour absorber les petits déplacements périodiques dus aux harmoniques d'ordre supérieur du régime vibratoire de chaque pale, indépendamment des autres pales auxquelles ces petits déplacements ne sont pas transmis, alors que ces éléments de caoutchouc sont comprimés ou tendus avec une amplitude telle que les mouvements de grande amplitude d'une pale sont transmis à la suivante par un tirant. En particulier, les mouvements oscillatoires angulaires et indépendants de chaque pale en traînée sont absorbés par les éléments élastiques, qui rappellent les deux tubes télescopiques de chaque tirant vers leur position initiale, tandis que les mouvements de grande amplitude en traînée sont transmis d'une manière positive d'une pale à la suivante par les tirants, et sont donc effectués simultanément par toutes les pales. De même, les oscillations angulaires de battements de faible amplitude, accomplies indépendamment par chaque pale, sont absorbée par les éléments élastiques, dont la capacité d'absorption est dépassée par des battements de grande amplitude, transmis d'une pale à l'autre, et provoquant une variation de l'angle de conicité du rotor. Ce brevet 948640 prévoit le remplacement des éléments élastiques par des moyens hydrauliques pour assurer la liaison entre les tubes télescopiques de chaque tirant. Mais, dans tous les cas, les éléments élastiques ou les moyens hydrauliques sont choisis de manière à assurer un haut degré d'amortissement et une résistance élevée aux mouvements, de manière à pouvoir efficacement éliminer ou réduire les vibrations d'une pale par rapport à l'autre. Dans un tel rotor, il n'est prévu pour les pales aucun autre amortissement que ceux provoqués par le frottement relatif des deux pièces pivotants l'une par rapport à l'autre sur l'articulation de traînée et par l'hystérésis de la matière constituant les éléments élastiques (qui est donc un matériau visco-élastique), ou par les moyens d'amortissement hydraulique.

Le brevet français 2125150 décrit un rotor, dont le moyeu en matière plastique armée de fibres à haute résistance, comporte, pour le support de chacune des pales, un bras flexible armé d'un faisceau radial de ces fibres, et ayant, au voisinage de la partie centrale du moyeu, une section transversale aplatie (dans le sens perpendiculaire à l'axe de moyeu) évoluant vers une section circulaire du côté de l'extrémité libre du bras, qui se termine par un tronçon de cylindre sensiblement radial, sur lequel est fixé un manchon cylindrique servant de pivot à une douille solidaire du pied de la pale correspondante. De la sorte, le bras flexible permet les oscillations angulaires de la pale en battement et en traînée, et l'axe virtuel de traînée de la pale est, dans la direction de l'axe de changement de pas et par rapport au centre du moyeu, situé radialement à l'extérieur de l'axe virtuel de battement de la pale, mais radialement à l'intérieur de son articulation en incidence, laquelle est interposée entre la pale et le bras flexible correspondant du moyeu, et constituée de la douille et du manchon autorisant le tourillonnement de la pale autour de son axe longitudinal de changement de pas. Dans la variante de la figure 5 de ce brevet français, des amortisseurs de traînée à faible course sont chacun disposés entre deux pales voisines, sur lesquelles l'amortisseur est retenu par ses extrémités fixées à des oreilles des manchons des deux pales. Chaque manchon porte, sur son extrémité radiale interne, deux oreilles ou paires d'oreilles en saillie latéralement par rapport à l'axe de pas de la pale, et dirigées l'une vers l'avant et l'autre vers l'arrière de cet axe de pas, par rapport au sens de rotation du rotor, de sorte que la liaison d'un amortisseur de traînée à un manchon soit, en direction radiale, à l'intérieur de l'articulation de changement de pas et à l'extérieur de l'articulation virtuelle de battement, et sensiblement dans la zone de l'axe virtuel de traînée, mais fortement décalé latéralement par rapport à cet axe virtuel de traînée.

Le brevet US 2494985 décrit un dispositif d'amortissement en traînée des pales d'un rotor d'un aéronef à voilure tournante, dont la tête est articulée. Le moyeu comprend une partie centrale supportant un bras radial pour chaque pale, et l'extrémité de chaque bras est agencée en chape dans laquelle un premier pivot est monté tourillonnant autour d'un axe parallèle à l'axe de rotation du moyeu. Chaque pale comprend un pied de pale en forme de manchon cylindrique, monté tourillonnant par l'intermédiaire de roulements autour d'un second pivot, qui est radial et avec lequel le manchon constitue l'articulation de changement d'incidence de la pale. Ce pivot radial se prolonge vers le centre du rotor par une chape montée pivotante autour d'un troisième pivot, d'axe perpendiculaire à la fois à l'axe de changement de pas de la pale et à l'axe du premier pivot. Ce troisième pivot, ou pivot de battement, traverse un noyau central lui-même monté pivotant avec le premier pivot entre les deux branches de la chape d'extrémité du bras de moyeu correspondant, de sorte que le premier pivot est le pivot de traînée, et que le noyau central est monté en joint universel sur les pivots de traînée et de battement, dont les axes, perpendiculaires l'un à l'autre, se coupent sur l'axe de pas de la pale correspondante, mais radialement à l'intérieur de l'articulation de changement de pas. Un levier en V est rigidement lié par sa base au pivot de traînée, et ses deux bras s'étendent simultanément radialement vers la pale correspondante (c'est-à-dire vers l'extérieur par rapport au centre du moyeu) et latéralement l'un vers l'avant et l'autre vers l'arrière de l'axe de pas de la pale, par rapport au sens de rotation du moyeu, de sorte que ses bras pivotent avec la pale autour de l'axe de traînée. Un amortisseur de traînée allongé est monté pivotant par deux chapes d'extrémité autour d'axes parallèles aux axes de traînée, d'un côté sur l'extrémité libre du bras avant du levier en V lié au pivot de traînée d'une pale, et de l'autre côté sur l'extrémité libre du bras arrière du levier en V lié au pivot de traînée de la pale immédiatement précédante dans le sens de rotation du rotor, de sorte que seules des charges axiales sont transmises des bras à l'amortisseur, lorsque les deux pales sont soumises à des oscillations angulaires de traînée déphasées. L'amortisseur de traînée est agencé pour changer de longueur avec amortissement lorsque les positions relatives de deux pales qu'il relie sont modifiées. L'amortisseur de traînée comporte une plaque centrale allongée, portant une chape d'extrémité et engagée entre deux plaques allongées latérales, portant des garnitures de frottement appliquées contre les faces opposées de la plaque centrale, et deux mécanismes transversaux à ressorts assurant un pincement ou serrage réglable de la plaque centrale entre les garnitures de frottement des deux plaques latérales, qui forment l'autre chape d'extrémité, afin de freiner tout déplacement axial de la plaque centrale par rapport aux deux plaques latérales. Mais cet amortisseur ne procure aucun rappel élastique des deux pales qu'il relie vers une position initiale relative, et, de par la forme et le montage des leviers en V solidaires en rotation des pales autour des pivots de traînée correspondants, un amortisseur et les deux bras de levier qui le relient à deux pales voisines forment un quadrilatère déformable, qui est un parallèlogramme articulé lorsque les oscillations angulaires de traînée sont nulles ou en phase, l'articulation efficace de chaque amortisseur sur une pale étant latéralement écartée d'une valeur importante de l'axe de pas de cette pale, car elle se trouve à l'extrémité libre du bras correspondant du levier en V, et non au pivot du levier sur la chape d'extrémité du bras radial du moyeu, puisque le levier en V est solidaire de la pale dans ses débattements angulaires en traînée.

Le brevet US 3302726 décrit une tête de rotor articulée et à pales reliées deux à deux par des amortisseurs linéaires de traînée à élément frottant, cette tête de rotor étant équivalente à celle décrite dans le brevet US 2494985 précédemment analysé, sauf en ce qui concerne la structure précise de chaque amortisseur, qui comprend des bandes élastiques entourant les éléments montés coulissants et frottants les uns contre les autres, de sorte que le frottement, et donc l'amortissement est augmenté lorsque l'amplitude du déplacement relatif en traînée des deux pales qu'il relie augmente, du fait de la déformation alors imposée aux bandes élastiques, qui, de plus, exercent un certain rappel des éléments frottants vers leur position initiale. Mais, pour ce qui concerne le montage pivotant de chaque extrémité de chaque amortisseur sur l'extrémité libre d'un bras d'un levier en V ouvert radialement vers l'extérieur et solidaire par sa base de la pale en rotation autour de l'axe de traînée, qui coupe l'axe de battement sur l'axe de pas de la pale correspondante, mais radialement à l'intérieur de l'articulation de changement de pas, cette tête de rotor est directement équivalente à celle du brevet US 2494985.

Toutes ces solutions connues proposent donc d'articuler chaque extrémité d'un tirant ou amortisseur de traînée sur un bras ou une patte de support solidaire de l'élément qui, dans l'articulation de traînée d'une pale correspondante, est entraîné avec la pale dans ses oscillations angulaires de traînée, donc pivotant avec la pale autour de son axe de traînée, et de sorte que le centre de l'articulation de chaque extrémité du tirant ou de l'amortisseur de traînée est très écarté latéralement de l'axe de changement de pas de cette pale, et radialement à l'extérieur de l'axe de traînée, de sorte que les centres des articulations des deux extrémités d'un tirant ou amortisseur de traînée et les axes de traînée des deux pales reliées par ce tirant, sont aux quatre sommets d'un quadrilatère articulé déformable. Il en résulte que les articulations des extrémités de chaque amortisseur de traînée ne sont pas sollicitées par les mouvements de changement de pas des deux pales correspondantes, dont les articulations en pas sont situées radialement à l'extérieur des axes de traînée. De plus, les têtes de rotor des brevets US 2494985 et 3302726 et du brevet français 948640 sont articulées et comportent, pour chaque pale, des articulations de battement, de traînée et de pas, réalisées par des pivots indépendants, disposés entre une partie rigide du moyeu et l'attache de pale, de sorte que, dans les deux brevets américains, les articulations de battement et de traînée sont au même niveau alors que l'articulation de pas de la pale est décalée radialement vers l'intérieur par rapport au centre du moyeu, alors que dans le brevet français 948640, l'articulation de battement est décalée radialement à l'intérieur de l'articulation de traînée, elle-même décalée radialement à l'intérieur de l'articulation de pas, ce qui correspond également à la configuration générale que l'on retrouve sur la tête de rotor du brevet français 2125150, dont les bras radiaux flexibles du moyeu présentent des articulations virtuelles de battement et de traînée.

Il en résulte donc que, dans les deux derniers brevets cités, les attaches des extrémités des tirants ou amortisseurs de traînée sont aussi sollicitées par les mouvements de battement des pales, ce qui entraîne un couplage traînée-battement indésirable.

Il est également important de noter que les têtes de rotor articulées comportant, pour chaque pale, une véritable articulation de traînée matérialisée autour d'un axe de traînée, parallèle à l'axe de rotation du rotor, et équipées de tirants interpales comme proposé dans les documents précités de l'état de la technique, sont des têtes de rotor qui ne correspondent plus à l'architecture des rotors de conception avancée, équipant des hélicoptères modernes actuellement commercialisés, notamment les rotors à pales et/ou moyeu en matériau composite, dont les pales sont liées au moyeu par des articulations elles aussi essentiellement composites.

Le problème à la base de l'invention est de remédier aux inconvénients mentionnés ci-dessus, et l'invention a pour but de proposer une tête de rotor munie de tirants interpales, dont le montage permet de ne solliciter chaque tirant que par les mouvements angulaires de traînée des pales entre elles, ces mouvements angulaires de traînée étant complètement découplés des mouvements angulaires de pas et de battement.

Un autre but de l'invention est de proposer une tête de rotor sur lequel chaque tirant interpale permet d'introduire non seulement un amortissement mais également un rappel élastique énergique dans les mouvements angulaires de traînée des pales entre elles. Un autre but enfin de l'invention est de proposer un montage de tirants interpales qui soit compatible avec les têtes de rotor de conception avancée du type comportant, pour chaque pale, une seule articulation-butée transmettant au moyeu les efforts centrifuges et les efforts tranchants provenant de la pale et donnant, autour d'un unique point central de l'articulation-butée, les trois degrés de liberté de la pale en battement, en traînée, et en pas, sans qu'il existe sur la tête de rotor un axe matériel de traînée autour duquel s'effectuent les oscillations angulaires en traînée d'une pale correspondante, et alors que l'organe de liaison directe de chaque pale à ladite articulation-butée, à savoir le pied de pale conformé lui-même en chape ou manchon de liaison, ou encore un organe indépendant, conformé en chape ou manchon de liaison, subit des mouvements angulaires combinés de battement, de traînée, et de pas.

A cet effet, l'invention a pour objet une tête rotor de type connu, comprenant un moyeu auquel chaque pale du rotor est retenue par un organe de liaison solidaire de la pale et relié au moyeu par l'intermédiaire de moyens d'articulation autorisant des oscillations angulaires de la pale autour d'un point unique sur lequel l'axe de battement, l'axe de traînée et l'axe de changement de pas sont concourrants, la tête de rotor comprenant également un dispositif de liaison interpale, comportant des tirants allongés de rappel élastique avec amortissement incorporé, qui sont en nombre égal aux pales et montés sensiblement en couronne autour du moyeu, de sorte que chacun d'eux relie l'une à l'autre deux pales voisines du rotor, chaque tirant comprenant au moins deux organes rigides allongés, dont chacun est muni de moyens de liaison articulée d'une extrémité respective du tirant à l'une respectivement des deux pales reliées par ce tirant, et qui sont reliés l'un à l'autre par un moins un organe de rappel élastique des deux organes rigides vers une position relative initiale, et par au moins un organe d'amortissement de tout mouvement relatif des deux organes rigides, au moins dans la direction longitudinale du tirant, et, selon l'invention, une telle tête de rotor est caractérisée en ce que les moyens de liaison articulée de chaque tirant sur une pale comprennent une rotule principale, dont le centre est situé sur ou à proximité immédiate de l'axe longitudinal de pas de la pale, et qui est retenue sur l'organe de liaison de la pale au moyen radialement à l'extérieur, par rapport au centre du moyeu, du point d'intersection des axes de traînée, de battement et de changement de pas de la pale, constituant le centre d'articulation unique de l'organe de liaison au moyeu. De la sorte, les mouvements oscillatoires et commandés de la pale autour de son axe de changement de pas ne provoquent aucune sollicitation parasite sur les tirants qui lui sont reliés, ce qui est très favorable à leur longévité et à leur dimensionnement dans le sens d'un allègement et d'un encombrement réduit.

Il est simultanément avantageux que les moyens d'articulation de l'organe de liaison d'une pale sur le moyeu comprennent une articulation-butée de type sphérique lamifié, constituant simultanément une articulation de battement, une articulation de traînée et une articulation de pas, et dont le centre est à l'intersection des axes de battement, de traînée et de pas de la pale correspondante, ce qui a pour avantage de supprimer les principaux couplages parasites sur la tête de rotor.

Dans un premier mode de réalisation préféré, les moyens de liaison articulée de deux tirants voisins sur une même pale comprennent une unique rotule principale, dont le centre est situé sur l'axe de changement de pas de la pale. .

Dans ce cas, il est avantageux que la rotule principale unique soit liée aux extrémités adjacentes de deux tirants voisins par une pièce de liaison rigide, comportant deux bras inclinés radialement vers le moyeu et latéralement l'un d'un côté et l'autre de l'autre côté de l'axe de changement de pas de la pale, les deux bras se rattachant l'un à l'autre par un oeil à rotule entourant la rotule principale, et l'extrémité libre de l'un des bras étant liée à l'extrémité adjacente du tirant situé du côté correspondant de l'axe de pas de la pale par des moyens de liaison assurant une liaison articulée secondaire, de sorte qu'en position relative initiale des organes rigides de chaque tirant, les centres des rotules principales de liaison de chaque tirant aux deux pales correspondantes et le centre de la liaison articulée secondaire de chaque tirant aux bras correspondants des pièces de liaison aux deux pales correspondantes sont alignés sensiblement sur l'axe longitudinal du tirant, ce qui permet de reprendre les désalignements.

La pièce de liaison a, avantageusement, la forme d'un V ouvert vers le moyeu, et dont l'extrémité libre de l'un des bras est conformée en chape de pivotement ou en oeil de pivotement sur l'extrémité adjacente d'un tirant, l'axe de pivotement de la chape ou de l'oeil de l'extrémité libre d'un bras étant parallèle à l'axe de la rotule principale qui est également sensiblement parallèle à l'axe de traînée de la pale, de façon à assurer une bonne stabilité d'ensemble en compression, à l'aide de pièces de liaison en V dont la réalisation est extrêmement aisée et peu coûteuse.

Avantageusement dans ce cas, un oeil de liaison solidaire de l'un des organes rigides d'un tirant peut être engagé et retenu entre les deux branches d'une chape d'extrémité d'un bras d'une pièce de liaison.

Avantageusement, pour absorber les petits mouvements dus aux harmoniques supérieurs de battement, et aux mouvements des pales lorsque le rotor est arrêté, au niveau des moyens de la liaison articulée secondaire, c'est-à-dire entre une extrémité d'un tirant et l'extrémité libre d'un bras correspondant d'une pièce de liaison à une pale, l'oeil de liaison d'un tirant est avantageusement retenu dans la chape d'extrémité du bras de la pièce de liaison par une rotule en élastomère lamifiée.

Dans un second mode de réalisation préféré de la tête de rotor selon l'invention, les moyens de liaison articulée de chacun de deux tirants voisins sur une même pale comprennent l'une respectivement de deux rotules principales, disposées sur l'organe de liaison correspondant symétriquement de part de d'autre de l'axe de changement de pas de la pale, chacune de ces rotules étant reliée au tirant situé du même côté de l'axe de changement de pas que la rotule considérée par un oeil à rotule, qui entoure la rotule considérée et qui n'est séparé de l'autre oeil à rotule que par un faible jeu transversal, perpendiculairement à l'axe de changement de pas de la pale.

En variante à cette réalisation dans laquelle chaque organe de liaison d'une pale au moyeu est relié aux deux tirants adjacents par deux rotules identiques aussi rapprochées que possible, les moyens de liaison articulée de chacun de deux tirants voisins sur une même pale comprennent l'une respectivement de deux rotules principales disposées sur l'organe de liaison correspondant dans des positions décalées radialement le long de l'axe de changement de pas de la pale, sur lequel chacune des rotules principales est centrée, chacune de ces rotules étant, dans ce cas également, reliée à l'une respectivement des deux tirants voisins considérés par un oeil à rotule qui l'entoure.

Dans cette variante, dans laquelle les deux rotules principales sont décalées radialement le long de l'axe de changement de pas de chaque pale, afin de rétablir une certaine symétrie de montage et de rééquilibrer la distribution des efforts dans les différents tirants, malgré le montage radialement décalé de deux tirants voisins sur une même pale, il est avantageux que la rotule principale de liaison d'une extrémité de chaque tirant à l'organe de liaison d'une pale au moyeu soit radialement à l'extérieur de l'autre rotule principale retenue sur l'organe de liaison de la pale au moyeu, tandis que la rotule principale de liaison de l'autre extrémité du tirant à l'organe de liaison d'une pale voisine au moyeu est radialement à l'intérieur de l'autre rotule principale retenue sur l'organe de liaison de la pale voisine.

Dans les deux configurations comprenant, sur chaque organe de liaison d'une pale au moyeu, deux rotules principales, au moins un oeil à rotule retenu sur ledit organe de liaison par l'une de ses rotules principales est directement solidaire de l'un au moins des organes rigides du tirant articulé sur cet organe de liaison par la rotule principale correspondante. Mais il est également possible qu'au moins un oeil à rotule, retenu sur cet organe de liaison d'une pale au moyeu par l'une des rotules principales correspondantes, présente un bras de liaison articulé sur au moins un organe rigide du tirant relié à cet organe de liaison par la rotule principale correspondante.

Sur chacun des tirants utilisés, au moins un organe de rappel élastique peut être constitué par une masse de rappel en un matériau élastiquement déformable, et au moins un organe d'amortissement peut être réalisé sous la forme d'un amortisseur hydraulique, de sorte que chaque tirant peut présenter une structure analogue à celle des contrefiches hydroélastiques, qui sont décrites dans les brevets français précités, et utilisées pour relier chaque pale au moyeu, ou encore une structure analogue à l'une de celles des contrefiches de rappel élastique à amortissement incorporé décrites dans le brevet français 2063969 de la Demanderesse.

En particulier pour des raisons de simplicité de réalisation, de fiabilité, d'encombrement, de masse, de traînée et de coût, il est avantageux que, dans les différents modes préférés de réalisation de la tête de rotor selon l'invention, chaque tirant comprenne comme indiqué dans la revendication 9 du brevet français 2063969, une plaque allongée plane rigide et centrale, engagée au moins partiellement entre deux plaques planes rigides et externes, allongées dans la même direction et à chacune desquelles la plaque centrale est liée par une couche d'un matériau viscoélastique adhérisé aux deux plaques qu'elle relie, selon une structure connue, dans laquelle le matériau visco-élastique est sollicité en cisaillement par des déplacements longitudinaux relatifs de la plaque centrale et des plaques externes, la plaque centrale présentant de plus un embout à oeil de pivotement, s'étendant d'un côté, dans la direction allongée des plaques, au-delà des plaques externes, tandis que ces dernières présentent, de l'autre côté dans la direction allongée des plaques, et au-delà de la plaque centrale, une liaison boulonnée avec l'extrémité de l'un des bras de la pièce rigide en V d'articulation de la rotule principale sur l'organe de liaison d'une pale au moyeu.

En outre, chaque tirant est avantageusement monté entre deux pales de sorte que le plan des plaques soit essentiellement parallèle aux axes de traînée des deux pales, ce qui, avec la faible masse de tels tirants, lorsque leurs plaques rigides sont en alliage léger, rend négligeable les effets des efforts centrifuges auxquels de tels tirants sont soumis.

Avantageusement en outre, pour limiter de façon absolue les débattements de chaque pale en traînée, dans un sens, pendant les phases de lancement du rotor, et dans l'autre sens pendant les phases de freinage de la rotation du rotor, chaque organe de liaison d'une pale au moyeu supporte, radialement à l'intérieur de chaque rotule principale qu'il retient, deux pattes en saillie latérale par rapport à l'organe de liaison et s'étendant l'une d'un côté et l'autre de l'autre côté de l'axe de changement de pas de la pale, chacune de ces deux pattes latérales présentant une surface de butée, tournée vers le moyeu, et destinée à venir en appui contre l'une de deux surfaces de butée de traînée, tournées vers l'extérieur du moyeu et vers le bout de la pale correspondante, et ménagées chacune sur l'un respectivement de deux bossages en saillie sur la face radiale externe du moyeu, et latéralement de part et d'autre de l'organe de liaison correspondant et des moyens d'articulation de ce dernier sur le moyeu. De la sorte, les débattements en traînée de la pale au démarrage et à l'arrêt de la rotation du rotor sont limités par appui direct de la surface de butée d'une patte latérale contre une surface de butée de traînée du moyeu.

Avantageusement de plus, l'une des deux pattes latérales de chaque organe de liaison se prolonge latéralement au-delà de la surface de butée correspondante et est conformée en levier de commande du pas de la pale correspondante, de sorte que ce levier de commande de pas et l'une des butées directes de traînée portées par la pale sont réalisés en une seule pièce.

Dans les différents modes de réalisation d'une tête de rotor selon l'invention, afin de faciliter la réalisation de chaque organe de liaison d'une pale au moyeu, ainsi que la réalisation des moyens d'articulation de cet organe de liaison et leur coopération, d'une part, avec cet organe de liaison, et, d'autre part, avec le moyeu, il est avantageux que chaque organe de liaison soit une chape radiale, comprenant une branche supérieure et une branche inférieure qui sont disposées en regard l'une de l'autre et espacées l'une de l'autre dans la direction de l'axe de traînée de la pale correspondante, et dont les extrémités radiales externes sont d'une seule pièce avec le pied de la pale, qui est alors fourchu, ou retiennent entre elles le pied de la pale correspondante, tandis que leurs extrémités radiales internes sont solidarisées à une armature radiale interne des moyens d'articulation sur le moyeu, qui comprennent également une armature radiale externe, fixée sur une partie du moyeu et disposée entre les deux branches de la chape, chacune des rotules principales correspondantes étant retenue et essentiellement logée entre les deux branches de la chape, entre les extrémités radiales externes de ces branches et l'armature radiale externe également disposée entre elles.

De la sorte, il est possible de retenir directement chaque rotule principale autour d'un axe parallèle à l'axe de traînée de la pale correspondante et entre les deux branches de la chape correspondante. En particulier, chaque rotule principale peut être, d'une part, logée entre deux bossages en saillie chacun vers l'autre sur la face de l'une respectivement des branches de chape qui est tournée vers l'autre branche et, d'autre part, retenue par une broche diamétrale d'axe parallèle à l'axe de traînée de la pale, et qui traverse la rotule et les bossages, et est fixée sur les deux branches de la chape.

Cependant, dans les modes de réalisation dans lesquels deux rotules principales sont retenues sur chaque chape de liaison d'une pale au moyeu, il est également possible que chaque rotule principale soit logée dans une pièce montée en entretoise entre les deux branches de la chape et présentant au moins un logement à rotule, s'ouvrant latéralement vers un côté de la chape et vers le moyeu, et dans lequel une rotule principale est retenue autour d'un axe diamétral perpendiculaire à l'axe de traînée de la pale correspondante et sensiblement perpendiculaire à l'axe longitudinal du tirant que cette rotule relie à la chape.

Dans ce dernier cas, il est possible d'utiliser une seule pièce montée en entretoise et présentant deux logements à rotule, recevant chacun une seule rotule, mais il est également possible de monter, entre les deux branches de la chape, deux pièces distinctes, montées en entretoise entre ces deux branches, chacune des deux rotules principales étant logée et retenue dans l'une respectivement de ces deux pièces formant entretoise.

En outre, lorsque l'organe de liaison d'une pale au moyeu est un chape, il est avantageux, pour faciliter sa réalisation en deux branches séparées qui sont assemblées l'une à l'autre, que les deux pattes latérales présentant les surfaces de butée et, le cas échéant, le levier de commande de pas, soient réalisées d'une seule pièce, qui est montée en entretoise entre les branches de chape auxquelles l'entretoise ainsi réalisée est fixée dans une position radiale entre la ou les rotules principales correspondantes et la partie du moyeu à laquelle est fixée l'armature radiale externe des moyens d'articulation correspondants.

Des têtes de rotor selon l'invention, et telles que définies ci-dessus, peuvent être réalisées en utilisant des moyeux des différents types dont l'usage a été récemment proposé pour l'équipement d'hélicoptères modernes.

En particulier, la tête de rotor peut comprendre un moyeu du type comportant une jante rigide périphérique, de forme sensiblement circulaire ou sensiblement polygonale, présentant des côtés et des sommets en nombres égaux aux pales, et tels que les côtés et/ou sommets soient arrondis, la jante rigide périphérique étant solidaire en rotation d'un mât-rotor autour de l'axe de rotation du rotor, et les moyens d'articulation de chaque organe de liaison d'une pale au moyeu, de préférence une unique butée sphérique lamifiée, étant essentiellement logés à l'intérieur de la jante et rattachent l'organe de liaison correspondant, de préférence une chape, à une partie de la jante du moyeu.

La jante du moyeu peut être rigidement reliée à un organe central sensiblement cylindrique, et éventuellement tubulaire, par lequel le moyeu est lié en rotation au mât-rotor, au moyen de rayons sensiblement radiaux, qui délimitent entre la jante et l'organe central du moyeu, des logements dans chacun desquels peuvent être montés les moyens d'articulation au moyeu de l'organe de liaison d'une pale à ce moyeu.

Mais, avantageusement, la tête de rotor selon l'invention comprend un mât-moyeu tubulaire intégré, qui présente la jante dans sa partie supérieure et est muni, pour chaque pale, d'au moins une ouverture percée dans le mât-moyeu, en position adjacente à la jante, et cette ouverture est traversée par une partie de l'organe de liaison correspondant, afin de relier la pale, à l'extérieur du mât-moyeu, aux moyens d'articulation correspondants, logés à l'intérieur du mât-moyeu.

Pour réduire la traînée aérodynamique d'ensemble de la tête de rotor, en particulier au niveau du moyeu, il est alors avantageux que celle-ci comporte un carénage bombé supérieur, recouvrant la partie supérieure du moyeu et présentant des évidements de passage des organes de liaison des pales au moyeu, ce carénage étant de préférence monté flottant sur la couronne des tirants en étant raccordé par des "silent blocs" à sa périphérie à des bras de liaison de certains tirants aux rotules principales correspondantes.

Mais il est également possible que la tête de rotor selon l'invention comprenne un moyeu du type comportant un plateau sensiblement radial, de forme sensiblement circulaire ou sensiblement polygonale à côtés et/ou sommets également arrondis, et solidaire en rotation d'un mât-rotor autour de l'axe de rotation du rotor, le plateau étant percé d'évidements en nombre égal aux pales, et les moyens d'articulation de l'organe de liaison d'une pale au moyeu étant alors au moins partiellement logés dans l'évidement correspondant et en appui contre le côté radial externe de cet évidement, en étant reliés à la pale par une partie supérieure et par une partie inférieure de l'organe de liaison, et ces deux parties supérieure et inférieure s'étendent respectivement au-dessus et au-dessous du plateau.

Selon l'invention, il est encore possible que la tête de rotor comprenne un moyeu du type comportant deux plateaux sensiblement radiaux, solidaires en rotation d'un mât-rotor autour de l'axe de rotation du rotor, et espacés l'un de l'autre dans la direction de l'axe de rotation du rotor, de sorte qu'ils présentent, pour chaque pale, deux parties radiales externes de plateau en regard l'une de l'autre, et entre lesquelles sont retenus les moyens d'articulation de l'organe de liaison correspondant au moyeu, ainsi qu'au moins une partie radiale interne de cet organe de liaison.

Dans tous ces types connus de moyeux l'invention sera avantageusement mise en oeuvre si l'organe de liaison de chaque pale au moyeu est une chape radiale double ou un manchon radial conformé en chape à chacune de ses extrémités radiales, et avec des lumières latérales pour permettre le passage des bras de liaison des rotules principales aux tirants interpales, des pattes présentant les surfaces de butée de traînée et un levier de commande de pas étant fixées sur ce manchon, la chape ou le manchon retenant, à son extrémité radiale externe, le pied de la pale correspondante, tandis que la chape ou le manchon est retenu(e) sur le moyeu par son extrémité radiale interne. De plus et simultanément, les moyens d'articulation de chaque organe de liaison sur le moyeu sont avantageusement constitués par une unique articulation sphérique lamifiée, formant également butée, dont l'armature radiale interne est retenue entre les extrémités radiales internes des deux branches de la chape radiale ou dans la chape de l'extrémité radiale interne du manchon de liaison, alors que l'armature radiale externe de la butée sphérique lamifiée est fixée contre la jante du moyeu, ou contre le bord radial interne de l'évidement du plateau du moyeu, ou encore retenue par au moins une broche entre deux parties en regard des deux plateaux du moyeu, par exemple deux bras radiaux et superposés des plateaux, selon que le moyeu est un moyeu à jante, un moyeu à plateau radial alvéolé ou évidé, ou enfin un moyeu à deux plateaux radiaux superposés.

L'invention sera mieux comprise, et d'autres avantages et caractéristiques de l'invention ressortiront de la description donnée ci-dessous à titre non limitatif, de plusieurs exemples de réalisation décrits en référence aux dessins annexés sur lesquels :

la Fig. 1 est une vue partielle en plan, et en partie en coupe, par le plan de rotation des pales, d'une tête de rotor à cinq pales et de deux des cinq chapes double de liaison des pales au moyeu, ainsi que des tirants interpales de rappel élastique avec amortissement incorporé, qui relient les chapes les unes aux autres,

la Fig. 2 est une vue en coupe selon II-II de la figure 1 et représente une chape double de liaison d'une pale au moyeu ainsi que sa liaison et son articulation à ce dernier,

la Fig. 3 est une vue analogue à la figure 1 d'un second exemple de tête de rotor à cinq pales, dont chacune des pales est reliée par une chape double, analogue à celle de la figure 2, à la jante d'un mât-moyeu tubulaire intégré du rotor,

la Fig. 4 est une vue schématique en demi-coupe par un plan vertical et sensiblement radial, selon IV-IV de la figure 3,

la Fig. 5 est une vue analogue à la figure 1 d'un troisième exemple de tête de rotor à cinq pales,

la Fig. 6 est une vue schématique, en partie en plan et en partie en coupe dans le plan de rotation des pales, d'un quatrième exemple de tête de rotor, à quatre pales et à moyeu comportant un unique plateau radial à alvéoles ou évidements pour la liaison des pales au moyeu,

la fig. 7 est une vue partielle d'une variante de la tête de rotor de la Figure 6, et sur laquelle le montage des rotules principales de liaison des tirants à chaque chape de liaison d'une pale au moyeu a été modifié,

la Fig. 8 est une vue schématique en coupe par un plan vertical et sensiblement radial de la tête de rotor de la figure 6, selon VIII-VIII de cette Figure 6, et

la Fig. 9 est une vue analogue à la Figure 8 pour une tête de rotor dont le moyeu comporte deux plateaux radiaux et espacés l'un au-dessus de l'autre.

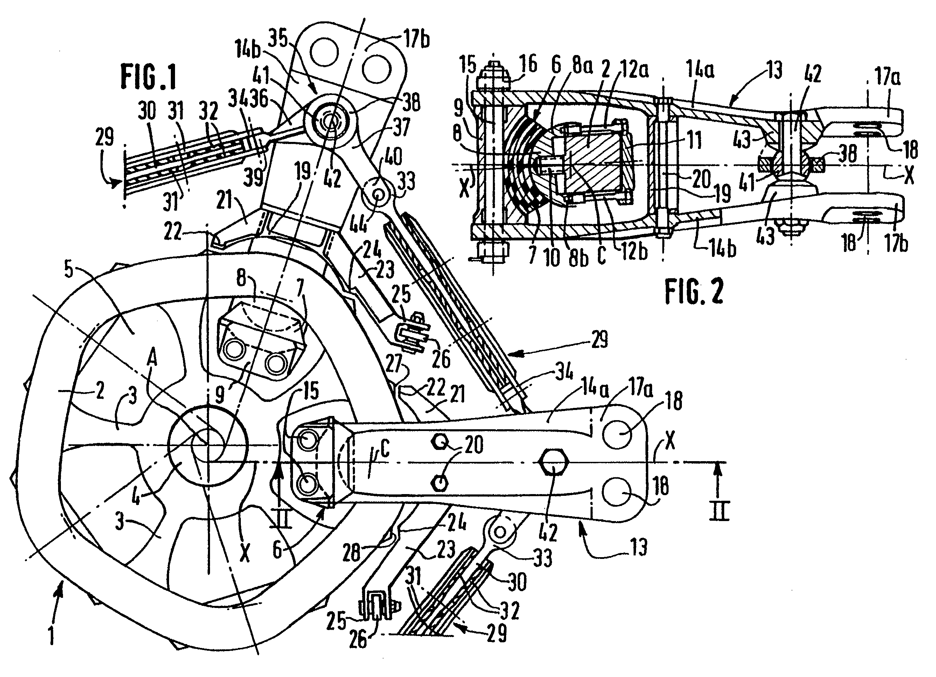

Sur la figure 1, on a partiellement représenté la tête d'un rotor à cinq pales, dont le moyeu 1 rigide comporte essentiellement une jante périphérique 2, reliée par cinq rayons sensiblement radiaux 3 à un corps central 4, cylindrique et tubulaire, qui est solidaire en rotation d'un mât-rotor (non représenté) autour de l'axe A de rotation du rotor.

La jante 2, de section transversale (par un plan vertical et radial) sensiblement carrée (voir Figure 2), présente en plan sensiblement la forme d'un pentagone régulier dont les côtés et les sommets sont légèrement arrondis et convexes, c'est-à-dire bombés radialement vers l'extérieur par rapport à l'axe A, et les cinq rayons 3 se raccordent à la jante 2 dans les zones situées sensiblement au milieu des cinq côtés du pentagone. Les rayons 3 délimitent ainsi entre eux et avec le corps central 4 et la jante 2, cinq évidements 5, dans chacun desquels peuvent être essentiellement logés les moyens d'articulation d'une pale sur le moyeu 1, ces moyens d'articulation prenant appui contre la face radiale interne de la jante 2, au niveau du sommet arrondi de cette dernière qui délimite l'évidement correspondant.

Le moyeu 1 peut être métallique ou réalisé, au moins partiellement, en matériaux composites, avec de préférence dans ce dernier cas une sangle ou une ceinture de renfort, qui est noyée dans la jante 2.

Les moyens d'articulation de chaque pale sur le moyeu 1 sont constitués par une unique articulation-butée sphérique lamifié 6 d'un type bien connu, comportant une partie centrale 7, constituée d'un empilement alterné de coupelles rigides, généralement métalliques, et de couches d'élastomère en forme de calottes sphériques, et qui est adhérisée, d'une part, contre la face convexe de la calotte sphérique en position radiale interne sur l'armature radiale externe 8 de la butée 6, et, d'autre part, contre la face concave de la calotte sphérique en position radiale externe sur l'armature radiale interne 9 de cette butée sphérique lamifiée 6.

Comme également représenté sur la figure 2, l'armature externe 8 est conformée en étrier comportant un bras radial supérieur 8a et un bras radial inférieur 8b, grâce auxquels l'armature externe 8 vient chevaucher la jante 2. De plus, l'armature externe 8 présente un alésage borgne, central et sensiblement radial, débouchant dans sa face radiale externe, entre les bras 8a et 8b, et par lequel l'armature externe 8 est positionnée avec une inclinaison convenable par rapport à la jante 2, par emmanchement, dans cet alésage borgne, d'un téton cylindrique 10 en saillie radialement vers l'intérieur sur la face radiale interne de la jante 2. L'armature externe en étrier 8 est retenue sur la jante 2 à l'aide d'une bride 11, appliquée contre la face radiale externe de la jante 2, et dont les extrémités supérieure et inférieure dépassent respectivement au-dessus de la face supérieure et au-dessous de la face inférieure de la jante 2, et sont rigidement reliées respectivement aux bras supérieur 8a et inférieur 8b de l'armature 8 par des goujons filetés supérieur 12a et inférieur 12b, à tête retenue contre la bride 11 et à tige filetée visée dans les bras respectivement 8a et 8b.

L'armature interne 9 de la butée sphérique lamifiée 6 est montée en entretoise rigide entre les extrémités radiales internes d'une plaque supérieure 14a et d'une plaque inférieure 14b, assemblées l'une à l'autre pour constituer les branches respectivement supérieure et inférieure d'une chape double et radiale 13 de liaison à la pale correspondante. L'armature interne 9 est retenue entre les branches 14a et 14b par deux goujons filetés 15 traversant des perçages coïncidants ménagés dans l'armature 9 et dans les branches 14a et 14b, selon des axes parallèles à l'axe de rotation A du rotor et symétriquement de part et d'autre de l'axe longitudinal de changement de pas X-X de la pale correspondante, ainsi que par des écrous 16 vissés sur les goujons 15. Les deux branches 14a et 14b sont disposées symétriquement l'une de l'autre par rapport au plan transversal, perpendiculaire à l'axe de rotation A du rotor et passant par l'axe de changement de pas X-X de la pale correspondante, et ces branches 14a et 14b ont chacune l'aspect d'une plaque rigide allongée radialement et ayant, en plan sensiblement la forme d'un trapèze isocèle de très grande hauteur. Comme représenté sur la figure 2, les deux plaques 14a et 14b sont sensiblement reserrées l'une vers l'autre dans leur partie médiane, et présentent des extrémités radiales externes respectivement 17a et 17b qui sont parallèles et en regard l'une de l'autre, avec un espacement suffisant entre elles, dans le sens vertical, parallèlement à l'axe A de rotation du rotor, pour recevoir et retenir entre elles le pied de la pale correspondante, à l'aide de deux broches (non représentées) retenues chacune dans deux perçages 18 coïncidants ménagés dans les extrémités plates 17a et 17b selon des axes parallèles à l'axe A et symétriquement de part et d'autre de l'axe de changement de pas X-X correspondant.

La chape radiale 13 est rigidifiée par une autre entretoise 19, montée et retenue rigidement par deux boulons 20 entre les branches 14a et 14b, que cette entretoise 19 relie l'une à l'autre en étant disposée radialement à l'extérieur de la jante 2, et les deux boulons 20 sont également d'axe parallèle à l'axe de rotation A du rotor et symétriques de part et d'autre de l'axe de changement de pas X-X. D'un côté de cet axe X-X, l'entretoise 19 se prolonge par une patte latérale 21 qui s'étend selon une direction inclinée latéralement vers l'extérieur de la chape 13 et radialement vers la jante 2, et dont l'extrémité libre présente, vers la jante 2, une surface de butée 22 sensiblement perpendiculaire à l'axe X-X. De l'autre côté de l'axe X-X, l'entretoise 19 se prolonge également par une patte latérale 23, s'étendant également selon une direction inclinée latéralement vers l'extérieur de la chape 13 et radialement vers la jante 2, et présentant également vers la jante 2 une surface de butée 24 sensiblement perpendiculaire à l'axe X-X. Mais la patte 23 est plus longue que la patte 21, et sa partie s'étendant au-delà de la surface de butée 24 est conformée en levier de commande de pas, avec une chape d'extrémité 25 dans laquelle est retenue, par une articulation à rotule, l'extrémité supérieure d'une bielle de commande de pas 26.

Pour chaque pale, la jante 2 présente deux bossages en saillie vers l'extérieur sur sa face radiale externe et situés latéralement de part et d'autre de la chape 13 correspondante, et ces bossages présentent chacun l'une de deux surfaces de butée de traînée 27 et 28, qui sont tournées vers l'extérieur et vers le bout de la pale correspondante, et situées en vis-à-vis respectivement des surfaces de butée 22 et 24 de l'entretoise 19. De plus, les surfaces de butée de traînée 27 et 28 sont des surfaces légèrement bombées avec une double courbure : elles présentent une certaine convexité dans un plan vertical parallèle à celui passant par l'axe X-X correspondant, et une autre légère convexité dans le plan horizontal passant par le même axe X-X, afin que ces surfaces de butée de traînée 27 et 28 permettent un certain débattement en pas et en battement, pendant que l'une ou l'autre peut être en contact avec respectivement la surface de butée 22 ou 24, d'un côté au démarrage de la rotation du rotor, et de l'autre côté à l'arrêt de cette rotation, en raison des débattements angulaires en traînée qui sont alors effectués par la pale correspondante autour de son axe de traînée, qui est un axe parallèle à l'axe A et passant par le centre C de la butée sphérique lamifiée 6, c'est-à-dire par le centre géométrique de la partie centrale 7 en calotte sphérique de cette butée 6, ce centre C étant, dans cet exemple situé géométriquement sur l'axe de changement de pas X-X et dans la jante 2, du côté de sa face radiale interne. A noter que l'axe du battement de la pale est également un axe perpendiculaire à l'axe de pas XX de la pale et passant par le centre C de la butée sphérique, mais cet axe de battement est situé dans le plan de rotation du rotor ou plan de traînée des pales. En effet, en raison de l'articulation, sur la jante 2, de chaque chape 13 de liaison d'une pale au moyeu à l'aide d'une butée lamifiée sphérique 6, les oscillations angulaires de chaque pale en battement et en traînée, ainsi que les changements commandés de l'orientation angulaire de chaque pale autour de son axe de changement de pas, par une action appropriée sur le levier de commande de pas 23 correspondant, sont autorisés par les déformations en cisaillement des couches d'élastomère de la partie lamifiée en calotte sphérique 7 de la butée lamifiée 6 correspondante, laquelle transmet en compression dans la jante 2 du moyeu 1 les efforts centrifuges et les efforts tranchants provenant de la pale et qui lui sont transmis par les plaques 14a et 14b de la chape 13.

Sur une telle tête de rotor, les surfaces de butées 22, 24, 27 et 28 définissent un dispositif de butées franches de traînée, permettant de limiter de façon absolue les débattements des chapes 13 en traînée pendant les phases de lancement du rotor dans un sens, et de freinage du rotor dans l'autre sens, par appui direct des chapes 13 sur la jante 2 du moyeu.

La tête de rotor comprend également cinq tirants 29 de rappel élastique avec amortissement incorporé (dont trois seulement apparaissent sur la figure 1), qui relient chacun les chapes 13 de deux pales voisines du rotor, et qui font office d'adaptateurs de fréquences en traînée des pales au sein d'un dispositif de liaison interpale monté en couronne autour du moyeu 1. Chaque tirant 29 est un élément allongé d'une structure bien connue, assurant un rappel élastique longitudinal avec un énergique amortissement interne, grâce à des plaques d'un matériau visco-élastique à grande rémanence de déformations qui sont interposées entre des plaques métalliques.

Plus précisément, dans cet exemple, chaque tirant 29 comprend un empilage alterné de trois plaques allongées, sensiblement rectangulaires, en alliage léger, et de deux couches allongées, également sensiblement rectangulaire, et en élastomère visco-élastique, de sorte que la plaque allongée 30 en position centrale entre les deux plaques externes 31 allongées dans la même direction, qui est la direction longitudinale du tirant 29, est reliée à chacune d'elles par l'une respectivement des deux couches d'élastomère 32, qui sont chacune adhérisées par vulcanisation sur la face interne de la plaque externe correspondante 31, et sur la face en regard de la plaque centrale 30. Ces plaques 30 et 31 et ces couches 32 sont d'une épaisseur relativement faible par rapport à leur longueur et leur largeur, de sorte que le tirant 29 a la forme d'un élément relativement plat, dans lequel les plans moyens des plaques 30 et 31 sont parallèles entre eux. La plaque centrale 30 s'amincit de l'une de ses extrémités, correspondant à un petit côté, vers son petit côté d'extrémité opposée, alors que chacune des deux plaques externes 31 s'amincit dans le sens opposé, de sorte que chaque couche d'élastomère 32 présente une épaisseur sensiblement constante. A son extrémité la plus épaisse, la plaque centrale 30 se prolonge au-delà des extrémités amincies des plaques externes 31 par un embout à oeil 33, dont l'axe de l'oeil est dans le plan moyen de la plaque centrale 30 et perpendiculaire à l'axe longitudinal du tirant 29, tandis qu'à leur extrémité la plus épaisse, chacune des plaques externes 31 se prolonge au-delà de l'extrémité amincie de la plaque centrale 30 par l'une des deux branches parallèles, espacées et percées de trous en coïncidence, d'une chape de liaison 34. L'embout à oeil 33 et la chape 34 constituent les deux extrémités longitudinales par lesquelles chaque tirant 29 est relié à deux chapes 13 voisines par l'intermédiaires de pièces de liaison 35 conformées chacune en levier coudé en V.

Chaque levier en V 35 est rigide et comprend deux bras 36 et 37 se raccordant l'un à l'autre au niveau de la base du levier 35, qui est conformée en oeil à rotule 38, et l'extrémité libre du bras 36 est conformée en embout 39 percé de trous en coïncidence avec ceux ménagés dans la chape 34 pour permettre leur solidarisation par au moins deux boulons, tandis que l'extrémité libre de l'autre bras 37 est conformée en chape 40 de pivotement autour d'un axe parallèle à l'axe de l'oeil 38. Chaque levier 35 est monté sur une chape 13 de sorte que ses bras 36 et 37 soient dirigés vers le moyeu 1 et de part et d'autre de l'axe de changement de pas X-X correspondant, c'est-à-dire de sorte que chaque levier en V s'ouvre vers le moyeu 1, et son oeil à rotule 38, dirigé vers la pale, entoure une rotule 41 retenue dans la chape 13 par une broche diamétrale 42, d'axe parallèle aux axes des goujons 15 et perpendiculaire à l'axe de changement de pas X-X qu'il coupe au centre de la rotule 41, la broche 42 étant retenue par sa tête sur la branche supérieure 14a et, sur la branche inférieure 14b, par un écrou vissé sur l'extrémité filetée de sa tige, et la rotule 41 est positionnée entre deux bossages 43, traversés par la broche 42 et en saillie l'un vers l'autre, l'un sur la face inférieure de la branche supérieure 14a et l'autre sur la face supérieure de la branche inférieure 14b, afin de garantir la position du centre de la rotule 41 sur l'axe de changement de pas X-X de la pale correspondante. L'embout à oeil 33 d'un tirant 29 est articulé par une petite rotule en élastomère lamifié 44 dans la chape 40 du bras 37 du levier en V 35. Ainsi, chaque chape 13 de liaison d'une pale au moyeu 1 est reliée par une seule rotule principale et centrale 41, centrée sur l'axe de changement de pas de cette pale, à la couronne des tirants interpales 29, en étant reliée à deux tirants voisins de cette couronne par un levier en V 35 correspondant, dont l'un 37 des deux bras 36 et 37 est relié par une petite rotule secondaire, telle que 44, à l'extrémité adjacente de celui des deux tirants 29 qui est situé du même côté de l'axe de pas X-X de la pale que le bras correspondant 37 du levier 35. L'axe de l'oeil 33 et de la chape 40 est parallèle aux axes de rotules principales 41 de façon à assurer une stabilité d'ensemble du montage des tirants 29 en compression, ces tirants 29 étant ainsi montés qu'au repos, les plan moyens de leurs plaques soient sensiblement verticaux et parallèles à l'axe A, et que le centre de la rotule secondaire 44 d'articulation de l'une des extrémités de chaque tirant 29 et les centres des deux rotules principales 41 que ce tirant 29 relie l'une à l'autre sont alignés sur l'axe longitudinal du tirant 29. Par contre, en fonctionnement, les petites rotules secondaires 44 sont destinées à compenser les désalignements.

Ce montage de chaque tirant 29 entre deux chapes 13 de liaison de deux pales voisines au moyeu a deux effets sur le fonctionnement de la tête de rotor :

les pales peuvent prendre une position d'équilibre en traînée, comme sur une tête de rotor sur laquelle elles seraient librement articulées, les oscillations en phase des cinq pales étant libres, ce qui a pour conséquence de déplacer les modes propres de transmission et d'éliminer tout amortissement pour ce type d'oscillations. Ainsi, chaque tirant 29 n'est sollicité que par des mouvements angulaires déphasés ou différentiels de traînée des pales entre elles, en introduisant un rappel élastique énergique et un amortissement dans ces mouvements angulaires déphasés de traînée, qui sont complètement découplés des mouvements angulaires de pas et de battement, de sorte qu'en particulier les sollicitations sur les tirants interpales 29 ne provoquent aucune sollicitation angulaire de pas sur les chapes 13 et sur la commande de pas qui leur est associée.

En vol, dans des conditions stabilisées, l'égalité connue entre l'angle de pas cyclique et le battement d'une pale, avec un déphasage de 90°, a pour conséquence que les rotules principales 41 reliant les tirants 29 aux chapes 13 des pales ne subissent que des mouvements cycliques de faible amplitude, de sorte que le plan décrit par les tirants 29 dans leur rotation avec les pales autour de l'axe A reste sensiblement parallèle au plan décrit par les extrémités des pales, si l'on ne tient pas compte des petits mouvements dus aux harmoniques supérieurs du régime vibratoire. Quant aux petites rotules secondaires d'articulation des tirants 29 sur les bras des leviers 35 de liaison, elles ne subissent que des petits mouvements dus aux harmoniques supérieurs de battement, ou aux mouvements des pales lorsque le rotor est arrêté. On note également que sur cette tête de rotor, la seule course imposée en condition statique aux tirants 29 provient des petites variations de la distance entre l'axe A du moyeu 1 et chaque tirant 29, qui sont dues à la traînée et la conicité du rotor. Considérée sur l'axe des tirants 29, une telle course statique serait d'environ 2 mm pour le cas de vol maximum, mais, sur une tête de rotor d'une telle structure, elle est sensiblement annulée par l'écrasement des couches d'élastomère comprimées des butées sphériques lamifiées 6 et par la déformation radiale de la jante 2 du moyeu 1, sous l'effet de la force centrifuge. On obtient ainsi naturellement un précalage favorable pour les vols à pleine puissance. De plus, il est facile d'ajuster la raideur des tirants 29 aux besoins, en adaptant la masse de matériau visco-élastique des tirants 29, et l'amortissement sera suffisamment assuré sans dépasser les possibilités des élastomères visco-élastiques connus. On peut ainsi obtenir une tête de rotor qui ne présente aucun couplage, et avec une bonne stabilité en résonance-sol et résonance-air.

Au démarrage et à l'arrêt du rotor, les butées de traînée 22, 24, 27 et 28 ne sont éventuellement chargées que pendant quelques tours et avec un faible niveau de contrainte, tout en permettant un débattement en pas et en battement pendant le contact des surfaces de butée 22 avec les surfaces de butées de traînées 27 ou des surfaces de butée 24 avec les surfaces de butée 28. Il est à noter qu'un tel dispositif de butées franches de traînée coopère avantageusement avec des butées basses de battement du type comprenant un anneau réciproque monté autour du mât rotor supportant le moyeu 1. En outre, en raison des liaisons interpales par les tirants 29, cette tête de rotor ne présente aucun risque de balourds ou de chocs contre les butées de battement ou de traînée au démarrage, notamment lorsque l'hélicoptère est posé sur une surface en pente.

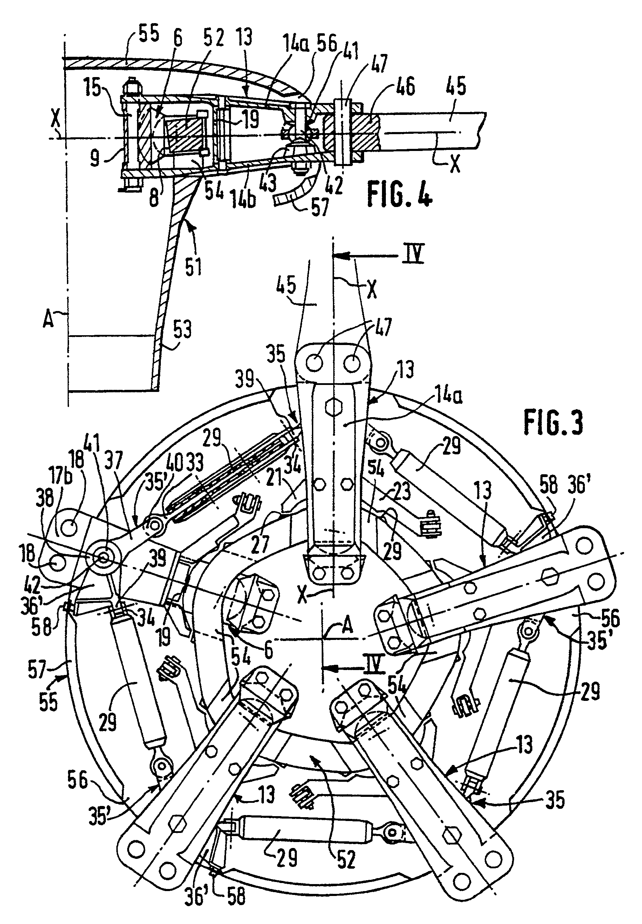

La figure 3 représente la tête d'un second exemple de tête de rotor à cinq pales, dont chaque pale 45 est rigidement retenue par son pied 46 et à l'aide de deux broches 47 (dont une est éventuellement amovible, pour autoriser le repliage de la pale 45 par pivotement autour de l'axe de l'autre broche 47) entre les extrémités radiales externes des branches supérieure 14a et inférieure 14b d'une chape radiale double 13, ayant la même structure et montée dans les mêmes conditions que dans l'exemple des figures 1 et 2. Ainsi, chaque chape 13 assure la liaison d'une pale 45 au moyeu 51 par l'intermédiaire d'une butée sphérique lamifiée 6, telle que décrite dans le premier exemple, et dont les armatures radiales respectivement externe 8 et interne 9 sont retenus respectivement sur la jante 52 du moyeu 51 et en entretoises entre les branches 14a et 14b de la chape 13 par des goujons 15, dans les mêmes conditions que dans le premier exemple. De même, la chape 13 comporte une seconde entretoise 19, portant les pattes latérales 21 et 23, munies de surfaces de butée de traînée, et dont l'une 23 est conformée en levier de commande de pas. Enfin, chaque chape 13 est reliée, de la même façon que dans le premier exemple, à deux tirants voisins 29 d'un dispositif de liaison interpale à cinq tirants de rappel élastique avec amortissement incorporé, qui sont identiques aux tirants du premier exemple, par l'intermédiaire d'une unique rotule principale 41 centrée sur l'axe de changement de pas X-X de la pale 45, et retenue entre les deux bossages 43 à l'intérieur des branches 14a et 14b de la chape 13, par une broche diamétrale 42 d'axe vertical. La jante 52 du moyeu présente également la même forme en plan et les mêmes butées de traînée 27 et 28 que la jante 2 du premier exemple.

Mais, dans ce second exemple, le moyeu est constitué par la partie supérieure d'un mât-moyeu tubulaire intégré 51, dont la partie inférieure 53 est directement entraînée en rotation autour de l'axe A du rotor par la boîte de transmission principale de l'hélicoptère, et qui peut être réalisé conformément aux enseignements des brevets français de la demanderesse N° 2.584.995, N° 2.584.996 et N° 2.584.997 dont la description est incorporée dans le présent mémoire par voie de référence.

Plus précisément dans ce second exemple, la jante 52 constitue l'extrémité supérieure surépaissie du mât-moyeu tubulaire intégré 52 en matériaux composites et réalisé selon le brevet français N°2.584.996, et donc tel que le mât-moyeu 51 est ajouré par des ouvertures 54 en nombre égal aux pales et régulièrement réparties en direction circonférentielle sur le pourtour du mât-moyeu 51, et en position adjacente à la jante 52. Celle-ci forme un anneau de renforcement, destiné à reprendre les efforts centrifuges introduits dans le mât-moyeu 51 par les butées sphériques lamifiées 6, qui sont essentiellement logées à l'intérieur du mât-moyeu 5 et prennent appui contre sa face interne au niveau de la jante 52, en étant reliées aux chapes 13 dont la branche inférieure 14b de chacune traverse l'ouverture 54 correspondante du mât-moyeu 51, comme représenté sur la demi-coupe verticale de la figure 4.

Afin de réduire la traînée aérodynamique globale de la tête de rotor, le mât-moyeu 51 est recouvert d'un carénage supérieure bombée 55, qui présente, dans sa partie périphérique, des ouvertures 56 en nombre égal aux pales 45 et ménagées de façon à permettre chacune le passage d'une chape 13 avec suffisamment de jeu pour ne pas interférer avec cette chape 13 dans ses débattements angulaires en battement, traînée et pas, la partie inférieure 57 du carénage qui est recourbée vers le mât-moyeu 1 ayant un bord radial interne suffisamment distant du mat-moyeu 51 pour ne pas interférer avec les bielles de commande de pas, reliées aux leviers 23, ni avec le dispositif de butées basses de battement (non représenté).

La fixation du carénage 55 sur le mât-moyeu 51 peut être assurée rigidement, à l'aide d'un chapeau (non représenté) fixé sur la jante 52 entre les chapes 13, et présentant des ouvertures radiales en nombre égal aux pales et régulièrement réparties en direction circonférentielle sur le chapeau, et dont chacune est axialement espacée d'une ouverture 54 du mât-moyeu 51 par la jante 52, afin d'être traversée par la branche supérieure 14a de la chape 13 dont la branche inférieure 14b traverse l'ouverture 54 correspondante.

Mais, pour limiter la taille des ouvertures 56 du carénage 55 et faire l'économie du chapeau de support de ce carénage, ce dernier est avantageusement monté flottant sur la couronne des tirants 29, en utilisant les rotules principales 41 comme support isolant le carénage 55 des mouvements de pas de chapes 13, mais l'entraînant en battement et dans les déplacements d'ensemble en traînée. La liaison de chaque rotule principale et centrale 41 aux deux tirants voisins correspondants 29 est assurée, comme dans le premier exemple, par une pièce de liaison en forme de levier en V, dont une chape 40 à l'extrémité d'un bras 37 est liée par rotule secondaire à l'embout à oeil 33 de l'extrémité adjacente de l'un des deux tirants 29, tandis qu'un embout 39 à l'extrémité de l'autre bras est rigidement lié par une liaison boulonnée à la chape 34 de l'extrémité adjacente de l'autre tirant 29. Mais, pour assurer le montage flottant du carénage 55 sur la tête de rotor, seuls deux leviers en V non voisins l'un de l'autre sont des leviers 35, identiques à ceux du premier exemple, tandis que les trois autres leviers en V 35' ont leur bras 36' présentant l'embout de liaison 39, qui est de forme sensiblement trapézoïdale et qui s'élargit de l'oeil à rotule 38 (prévu à la base de chaque levier en V 35 ou 35' pour entourer la rotule principale 41 correspondante) vers l'embout de liaison 39 et radialement vers l'extérieur, et qui supporte, au niveau de son sommet dirigé radialement vers l'extérieur, un petit plot de caoutchouc conformé en "silent bloc" 58, sur lequel le carénage 55 est fixé au niveau du bord de l'échancrure 56 correspondante.

Les trois "silent blocs" 58 qui rattachent la périphérie du carénage 55 aux trois leviers en V 35' isolent le carénage 55 des mouvements de traînée différentielle des pales, et la découpe des échancrures 56 peut être réduite au minimum nécessaire pour permettre le passage des chapes 13, leurs mouvements de traînée différentielle et les petits mouvements dus aux harmoniques supérieurs de battement. Le basculement du carénage flottant 55 qui est induit par le battement des pales 45 est d'une amplitude qui est sensiblement la moitié de celle de ce battement.

En plus des avantages déjà mentionnés pour le premier exemple, une telle réalisation est particulièrement avantageuse du fait de la grande compacité du mât-moyeu intégré, et du fait que le faible rayon d'attache des pales 45 (c'est-à-dire la faible distance séparant les broches 47 de l'axe A de rotation du rotor) permet un carénage compact, de sorte que la traînée aérodynamique d'ensemble de la tête de rotor est réduite. On note de plus que, pour permettre le repliage des pales 45, seule la partie inférieure 57 du carénage 55 doit être supprimée ou échancrée de manière appropriée.

Il est clair qu'à la place d'un mât-moyeu tubulaire intégré avec une ouverture radiale par pale et une jante à son extrémité supérieure, il est possible d'utiliser un mât-moyeu tubulaire intégré avec une paire d'ouverture radiales par pale, qui sont situées de part et d'autre d'une ceinture de renforcement, et traversées l'une par la branche supérieure et l'autre par la branche inférieure de la chape de liaison correspondante, comme décrit dans le brevet français n° 2.584.995, ou encore un mât-moyeu tubulaire intégré analogue à celui décrit ci-dessus en référence aux figures 3 et 4 mais qui se prolonge axialement au-delà de la jante 52 par une portion d'extrémité présentant, pour chaque pale, une échancrure s'ouvrant dans le bord libre de cette portion et en correspondance axiale avec l'ouverture correspondante dans le mât-moyeu, pour que les branches inférieure et supérieure de la chape de liaison correspondante traversent respectivement l'ouverture radiale et l'échancrure correspondante du mât-moyeu.

Lorsque le mât-moyeu tubulaire comporte une telle portion d'extrémité supérieure échancrée, cette dernière est, éventuellement de plus, comme mentionné également dans le brevet français N° 2.584.996, recouverte d'un chapeau solidaire du moyeu et présentant également, pour chaque pale, une échancrure s'ouvrant dans son bord tourné vers la jante, de sorte que chaque échancrure du chapeau forme avec une échancrure de la portion d'extrémité du mât-moyeu, une ouverture radiale supérieure, traversée par la branche supérieure de la chape de liaison correspondante dont la branche inférieure traverse l'ouverture radiale correspondante ménagée sous la jante dans le mât-moyeu.

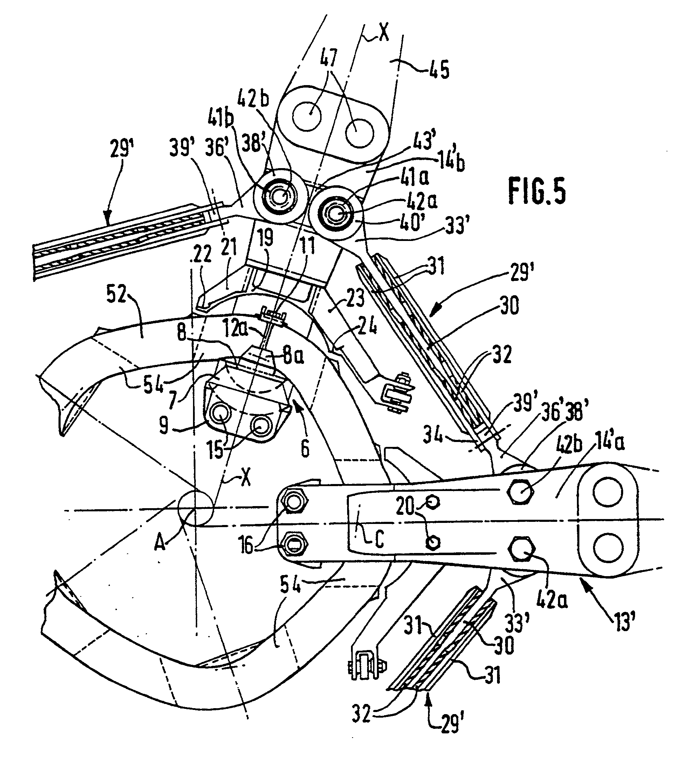

La tête de rotor à cinq pales partiellement représentée sur la figure 5 comporte un mât-moyeu tubulaire intégré, identique à celui des figures 3 et 4, avec une ouverture radiale 54 par pale et une jante 52 à son extrémité supérieure, mais le moyeu pourrait être celui de la figure 1, avec une jante reliée par des rayons à un corps central de moyeu.

Chaque pale 45 est reliée à la jante 52 par une chape de liaison 13', dont la seule différence de structure par rapport à la chape 13 des exemples précédents est qu'elle retient entre ses branches supérieure 14'a et inférieure 14'b deux rotules principales 41a et 41b, disposées symétriquement de part et d'autre et à proximité immédiate de l'axe de changement de pas X-X de la pale 45. Chaque rotule principale 41a ou 41b est retenue par une broche diamétrale 42a ou 42b fixée aux branches 14'a et 14'b, l'axe de cette broche étant parallèle aux axes des broches 47 de liaison du pied de la pale 45 à la chape 13' et dans un plan perpendiculaire à l'axe X-X, dans une position radiale à l'intérieur des broches 47 mais à l'extérieur de l'entretoise 19, montée entre les branches 14'a et 14'b et juste à l'extérieur radialement de la jante 52, et portant les pattes latérales 21 et 23 munies des surfaces de butée de traînée 22 et 24, et dont la seconde forme le levier du commande de pas. Comme dans les exemples précédents, chaque chape 13' est retenue et articulée sur la jante 52 par une butée sphérique lamifiée 6, dont la structure et le montage sur la jante 52 sont en tout point identiques à ce qui a été décrit à ce propos en référence aux figures 1 et 2, de sorte que les mêmes références sont portées sur la figure 5 pour désigner les mêmes éléments sans qu'il soit à nouveau nécessaire de décrire ces éléments.

Dans cet exemple également, le dispositif de liaison interpale comprend cinq tirants 29' de rappel élastique avec amortissement incorporée, qui sont montés en couronne autour de la jante 52 et qui sont chacun constitués du même empilement alterné d'une plaque métallique centrale 30 et de deux plaques métalliques externes 31 avec deux couches d'élastomère visco-élastique 32 que dans les deux premiers exemples. De plus, une extrémité longitudinale de chaque tirant 29′ est constituée par une chape double de liaison boulonnée 34 dont les deux branches sont formées par les prolongements des deux plaques externes 31 au-delà de la plaque interne 30. Par contre l'embout à oeil 33′ solidaire de la plaque centrale 30, au-delà des plaques externes 31, et formant l'autre extrémité longitudinale du tirant 29′, est un embout dont l'oeil 40′, d'axe perpendiculaire aux plans moyens des plaques 30 et 31 et à l'axe de la chape 34, est monté directement autour de la rotule principale 41a située du même côté de l'axe de changement de pas X-X d'une pale 45 que le tirant 29′ raccordé à cette pale de ce côté de l'axe X-X, et auquel l'embout 33′ appartient, tandis que la chape 34 de l'autre extrémité du tirant 29′ est reliée à la pale voisine par un bras 36′, dont une extrémité est conformée en oeil à rotule 38′, entourant directement l'autre rotule principale 41b de cette autre pale, l'autre extrémité du bras de liaison 36′ étant conformée en petit manchon 39′, dont l'extrémité est engagée à l'intérieur des deux branches de la chape double 34 et fixée à celle-ci par deux boulons (non représentés), les dimensions des rotules principales 41a et 41b et de chaque oeil 38′ ou 40′ étant telles que l'oeil 40′ est pratiquement tangent extérieurement à l'oeil 38′ et n'est séparé de ce dernier que par un faible jeu transversal, dans la direction perpendiculaire à l'axe X-X.

La différence essentielle de cette réalisation par rapport aux deux exemples précédents est donc que chaque chape de liaison 13′ d'une pale 45 au moyeu est reliée à chacun des deux tirants 29′ qui lui sont adjacents par l'une respectivement de deux rotules principales identiques 41a et 41b, retenues dans la chape 13′ symétriquement de part et d'autre de l'axe de changement de pas X-X de la pale correspondante, mais aussi rapprochées que possible l'une de l'autre.

Par rapport aux exemples précédents, cette configuration introduit un effet du pas collectif des pales sur la déformation des tirants 29′, en l'absence de traînée différentielle des pales, mais la disposition des rotules principales 41a et 41b aussi rapprochées que possible limite cette déformée "statique" aux pas extrêmes à une faible valeur, de l'ordre de 1,5 mm. Par contre, les opérations de maintenance sont facilitées car chaque tirant 29′ peut être démonté et remplacé individuellement, sans avoir à désolidariser les deux tirants 29′ voisins des chapes 13′ correspondantes.

Enfin, pour garantir que les rotules principales 41a et 41b sont retenues dans chaque chape 13′ de sorte que leur centre soit dans le plan de rotation du rotor (plan perpendiculaire à l'axe de rotation A du rotor et passant par l'axe de changement de pas X-X de la pale) ces rotules principales sont disposées côte à côte entre deux bossages internes et similaires aux bossages 43 de la figure 2, mais s'étendant transversalement sur toute la largeur des branches 14′a et 14′b de la chape 13′. Un tel bossage inférieur 43′ est schématiquement représenté sur la figure 5.

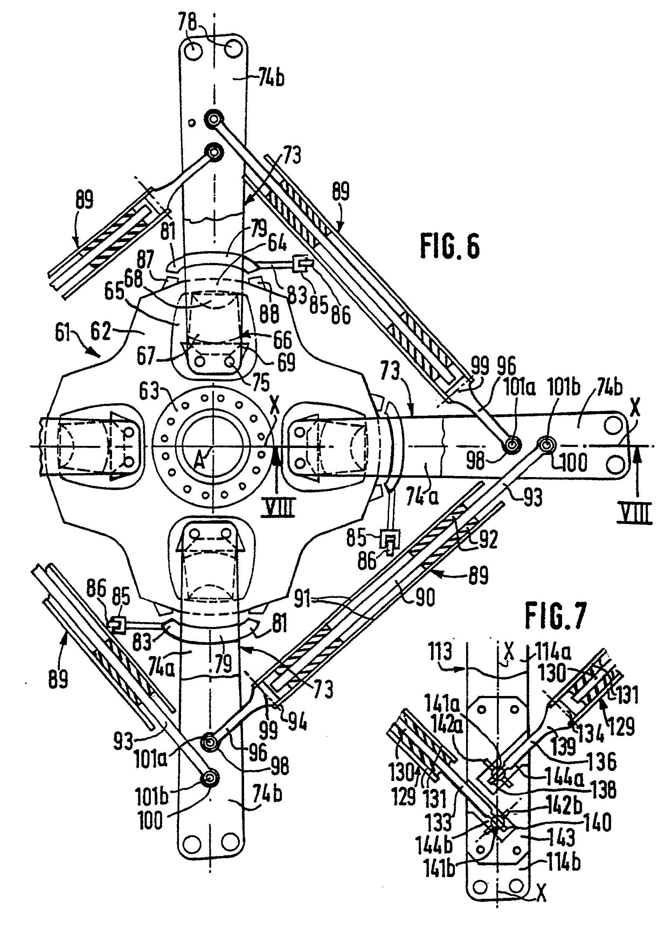

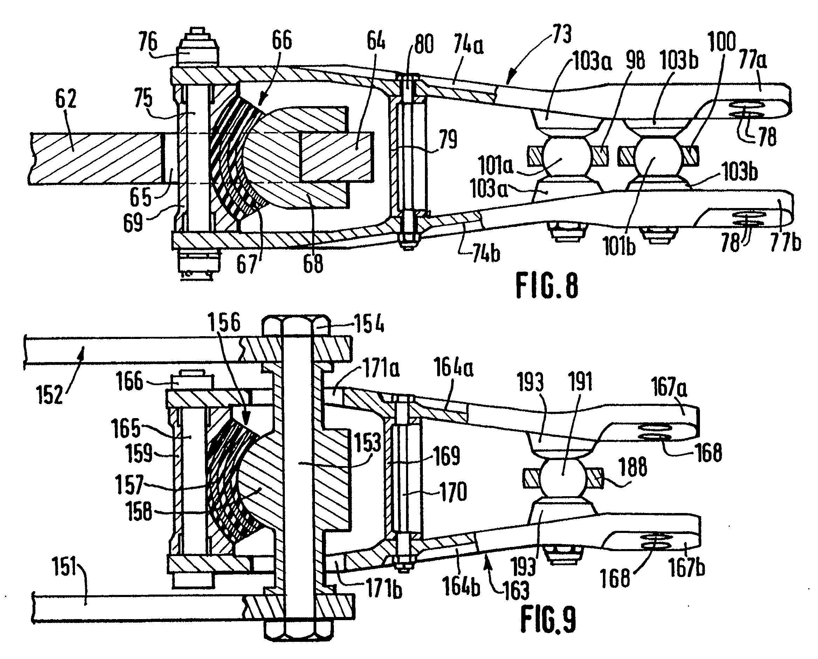

La tête de rotor quadripale représentée schématiquement sur les figures 6 et 8 comprend un moyeu 61 d'un type différent de ceux des exemples précédents, car il s'agit d'un moyeu à un seul plateau radial 62 par rapport à l'axe A de rotation du rotor, et qui est solidaire d'un corps de moyeu central et tubulaire 63, entraîné en rotation autour de l'axe A. Le plateau radial 62 est un plateau sensiblement cruciforme, dont l'extrémité radiale externe de chacun des bras est légèrement convexe, et dont chaque bras est séparé d'un bras voisin par un évidement concave. Le plateau 62 présente de plus, dans chacun des bras, qui sont en nombre égal aux pales, un évidement ou un alvéole 65, percé au travers du plateau 62 dans une direction parallèle à l'axe A, et fermé radialement vers l'extérieur par une bordure 64 du plateau 62. Chacune des quatre pales (non représentées) est reliée au plateau 62 du moyeu 61 par une chape 73 à deux branches radiales, superposées et espacées l'une de l'autre dans la direction de l'axe A, avec sensiblement la même structure et la même disposition que la chape 13 des deux premiers exemples. Comme représenté également sur la figure 8, les deux branches supérieure 74a et inférieure 74b de la chape 73 sont retenues l'une à l'autre et sur le plateau 62, et simultanément articulées sur ce dernier, par une unique butée sphérique lamifiée 66, de structure tout-à-fait analogue à la butée sphérique lamifiée 6 des exemples précédents, et dont l'empilement alterné 67 de calottes sphériques rigides et de couches d'élastomère travaille en compression et en cisaillement de l'élastomère entre l'armature radiale externe 68, montée en étrier sur la bordure 64 de l'évidement 65 correspondant en étant boulonné sur cette bordure 64, et l'armature radiale interne 69, montée en entretoise entre les branches 74a et 74b auxquelles elle est retenue par deux goujons filetés 75 coopérant avec des écrous 76, l'ensemble de l'armature 69, des goujons 75, de l'empilage lamifié 67 et de la majeure partie de l'armature interne 68 étant logée essentiellement dans l'évidement 65 correspondant du plateau 62. De même que dans le premier exemple, les extrémités radiales externes 77a et 77b des branches 74a et 74b de la chape 73 sont percées de deux paires d'orifices 78 coaxiaux et en regard pour le passage de broches de liaison du pied de la pale correspondante à la chape 73. Les deux branches 74a et 74b de cette dernière sont encore retenues l'une à l'autre par une entretoise 79, montée entre ces deux branches, radialement à l'extérieur de la bordure 64 de l'alvéole 65 correspondant du plateau 62, et cette entretoise 79, retenue sur les branches par des boulons 80, présente également en saillie latérale de part et d'autre de l'axe X-X de changement de pas de la pale correspondante, des pattes 81 et 83, recourbées vers le plateau 62 en présentant des surfaces de butées de traînée en regard de butées de traînée 87 et 88 en saillie sur la face radiale externe du bras de plateau 62 correspondant, l'une des pattes transversales 83 se prolongeant en levier de commande de pas présentant une chape 85 de liaison à une bielle de commande de pas 86 sensiblement dans l'évidement concave qui sépare ce bras d'un bras adjacent du plateau 62.

Comme dans l'exemple précédent, le moyeu 61 est entouré d'un dispositif interpale constitué de tirants de rappel élastique à amortissement incorporé, en nombre égal aux pales, et montés en couronne autour du plateau radial 62. Dans cet exemple, chacun des quatre tirants 89 est d'une structure très semblable à celle des tirants 29' de la figure 5, puisqu'il présente un empilement alterné des plaques rigides centrale 90 et externes 91 avec deux couches d'élastomère visco-élastique 92, un embout à oeil 93 prolongeant la plaque centrale 90 à une extrémité du tirant 89, et une chape de liaison 94, prolongeant les deux plaques externes 91 à l'autre extrémité du tirant 89. De même, le montage de chaque tirant 89 sur deux chapes 73 voisines de liaison d'une pale au moyeu est analogue au montage d'un tirant 29' de la figure 5 sur deux chapes 13' voisines, dans la mesure où un petit manchon de liaison 99, à une extrémité d'un bras de liaison 96, est solidarisée à la chape d'extrémité 94 du tirant 89, un oeil à rotule 98 prévu à l'autre extrémité du bras de liaison 96 est directement monté autour de l'une 101a des deux rotules principales 101a et 101b retenues dans la chape 73 correspondante, et un oeil à rotule 100, à l'extrémité de l'embout 93, est directement monté autour de l'autre 101b des deux rotules principales 101a et 101b également retenues dans l'autre chape 73 correspondante. Mais, dans l'exemple des figures 6 et 8, la différence essentielle par rapport à l'exemple précédent, est que les deux rotules principales 101a et 101b, par lesquelles chaque chape 73 est reliée à deux tirants adjacents 89, sont décalées radialement le long de l'axe de changement de pas X-X de la pale correspondante, tout en étant séparées l'une de l'autre d'une distance aussi faible que possible, compte-tenu des impératifs de liaison mécanique et des débattements des organes qui les entourent, chacune de ces deux rotules principales 101a et 101b étant cependant centrée sur l'axe de changement de pas X-X.

Sur les figures 6 et 8, chaque rotule principale et centrale 101a et 101b est ainsi retenue dans la chape 73 correspondante comme dans les exemples précédents, par une broche diamétrale (non représentée) d'axe perpendiculaire au plan de rotation du rotor, (c'est-à-dire au plan perpendiculaire à l'axe A et passant par l'axe de changement de pas X-X), et traversant non seulement la rotule 101a ou 101b correspondante, mais également deux bossages 103a ou 103b, qui sont en saillie sur les branches 74a et 74b de la chape 73 et en regard l'un de l'autre vers l'intérieur de la chape 73, et entre lesquels la rotule 101a ou 101b correspondante est disposée de sorte que son centre soit bien sur l'axe de changement de pas X-X de la pale correspondante, dans les mêmes conditions que la rotule 41 entre les bossages 43 sur la figure 2.

De plus, comme représenté sur la figure 6, chaque tirant 89 est relié par l'oeil à rotule 100 de son embout d'extrémité 93 à la rotule 101b en position radiale externe sur une chape de liaison 73, et par la chape 94 à son extrémité opposée au bras de liaison 96 relié à la rotule 101a en position radiale interne sur l'autre chape 73 à laquelle ce tirant 89 est relié.

Pour permettre ce montage des rotules 101a et 101b sur les chapes 73, ainsi que leur liaison aux tirants 89, il est nécessaire que l'axe de chaque oeil à rotule 98 ou 100 soit parallèle au plan moyen du tirant 89 correspondant et perpendiculaire à l'axe longitudinal de ce tirant 89, et donc que l'axe de la chape 94 et du petit manchon 99 soit perpendiculaire au plan moyen de ce tirant 89.

Un autre montage possible est représenté schématiquement en variante sur la figure 7, sur laquelle on retrouve que chaque chape 113 de liaison d'une pale au moyeu est reliée à deux tirants adjacents 129 par deux rotules principales et centrales, décalées radialement l'une par rapport à l'autre de long de l'axe de changement de pas X-X de la pale correspondante et chacune centrée sur cet axe X-X.

Mais, dans ce montage, l'oeil à rotule 140 à l'extrémité de l'embout 133 prolongeant la plaque rigide centrale 130 de chaque tirant 129 est un oeil d'axe perpendiculaire au plan moyen du tirant 129, tandis qu'une chape double 134 solidarise les plaques rigides externes 131 à l'autre extrémité du chaque tirant 129 au bras de liaison 136 (par des boulons non représentés).

L'oeil à rotule 138 du bras de liaison 136 entoure une rotule principale et centrale 141a, logée dans un évidement 144a ménagé dans une entretoise 143 fixée entre les deux branches 114a et 114b de la chape 113, tandis que l'oeil à rotule 140 à l'extrémité de l'embout 133 du tirant 129 entoure directement l'autre rotule principale et centrale 141b, qui est, comme la rotule 141a, centrée sur l'axe X-X mais décalée radialement à l'extérieur de la rotule 141a et logée également dans un évidement 144b ménagé dans l'entretoise 143. Chacun des évidements 144a et 144b forme un logement à rotule qui s'ouvre latéralement dans l'un respectivement des côtés de l'entretoise 143 et de la chape 113, en étant simultanément incliné radialement vers le moyeu, selon une direction qui correspond à celle de l'axe longitudinal du tirant 129 correspondant que la rotule logée dans le logement considéré relie à la chape 113. Chacune des rotules 141a et 141b est retenue dans le logement 144a ou 144b correspondant par une broche diamétrale traversant le logement, et retenue dans les parois opposées de ce dernier, et l'axe 142a ou 142b de cette broche est d'une part perpendiculaire à l'axe de traînée de la pale correspondante, c'est-à-dire à l'axe perpendiculaire au plan du rotor et passant par le centre de la butée sphérique lamifiée, telle que 66, articulant la chape 113 sur le moyeu, et, d'autre part, sensiblement perpendiculaire à l'axe longitudinal du tirant 129 que la rotule 141a ou 141b considérée relie à la chape 113.

En variante, l'entretoise 143 qui est boulonnée entre les branches 114a et 114b de la chape 113, peut être remplacée par deux entretoises différentes, dont chacune est boulonnée également entre les branches 114a et 114b, et présente un seul des logements 144a et 144b, pour loger la seule rotule 141a ou 141b correspondante.

Lorsque chaque chape de liaison d'une pale au moyeu est reliée à chacun des deux tirants adjacents par l'une respectivement de deux rotules principales, il est encore possible, en variante, que ces deux rotules principales soient à la fois décalées radialement l'une de l'autre selon l'axe de changement de pas de la pale correspondante et décalées latéralement l'une de l'autre, de part et d'autre de cet axe de changement de pas, les deux rotules étant alors avantageusement centrées dans le plan de rotation du rotor et symétriquement l'une de l'autre par rapport au point d'intersection de l'axe de changement de pas et de l'axe passant par les centres des deux rotules. Dans ce cas, l'écartement radial comme l'écartement transversal des centres des rotules devront être aussi faibles que possible, tout en étant compatibles avec les éléments mécaniques nécessaires à la retenue des rotules entre les branches de la chape de liaison correspondante, ainsi qu'avec les débattements des éléments mécaniques entourant ces rotules.

Le montage d'un dispositif de liaison interpale selon l'invention, dont les tirants de rappel élastique avec amortissement incorporé sont reliés aux chapes de liaison des pales au moyeu, à l'aide d'une seule ou de deux rotules principales, retenues dans chaque chape et éventuellement centrées sur l'axe de changement de pas de la pale correspondante, n'est pas limité aux têtes de rotor dont le moyeu est un moyeu à jante raccordée par des rayons à un corps de moyeu central, à jante supportée par un mât-moyeu tubulaire intégré, ou à unique plateau radial, circulaire ou sensible ment polygonal, présentant des alvéoles de logement des moyens de retenue et d'articulation de chaque chape sur le plateau de moyeu, comme décrit par exemple dans le brevet français 78.16.521 de la demanderesse. Mais le dispositif de liaison interpale selon l'invention peut également être utilisé et monté sur des têtes de rotor dont le moyeu comprend deux plateaux sensiblement radiaux, disposés l'un au-dessus de l'autre avec espacement dans la direction de l'axe de rotation du rotor, en présentant, pour chaque pale du rotor, deux parties de plateau en regard l'une de l'autre et entre lesquelles sont retenus l'extrémité radiale interne de la chape de liaison et les moyens de retenue et d'articulation de cette chape sur les plateaux du moyeu. Des moyeux de ce type à deux plateaux radiaux sont décrits par exemple dans le brevet français de la demanderesse N° 79.11.585, et la coopération d'un tel moyeu avec une chape de liaison retenant une unique rotule principale et centrale de liaison à deux tirants interpales adjacents est schématiquement représentée sur la figure 9.

Sur cette figure 9, on retrouve une chape 163 radiale, dont les branches supérieure 164a et inférieure 164b retiennent, entre leurs extrémités radiales externes 167a et 167b, le pied de la pale correspondante, à l'aide de broches traversant les perçages en regard 168, les deux branches 164a et 164b étant rigidement reliées l'une à l'autre, dans la partie médiane, par l'entretoise 169 fixée par des boulons 170 et portant, en saillie latérale de part et d'autre de la chape 163, des pattes munies de butée de traînée et dont l'une est de plus conformée en levier de commande de pas. Les deux branches 164a et 164b sont également reliées l'une à l'autre, au niveau de leurs extrémités radiales internes, par des ensembles à goujons filetés 165 et écrous 166, qui les maintiennent appliquées de part et d'autre de l'entretoise formée par l'armature radiale interne 159 d'une butée sphérique lamifiée 156 dont l'armature radiale externe 158 traverse des évidements 171a et 171b ménagés respectivement dans la branche supérieure 164a et dans la branche inférieure 164b, de sorte que cette armature radiale externe 158 puisse être montée en entretoise entre des bras radiaux 151 et 152 appartenant respectivement à un plateau radial inférieur et à un plateau radial supérieur du moyeu. L'armature radiale externe 158 est retenue en position entre les bras 151 et 152 du moyeu par des boulons 153-154, et le centre de l'empilage alterné 157 de coupelles rigides et de couches d'élastomère de la butée sphérique lamifiée 156 est situé dans le plan passant par l'axe des boulons 153. Comme dans l'exemple des figures 1 et 2, une rotule principale et centrale 191 est retenue entre les bossages internes 193 des branches 164a et 164b de la chape par une broche diamétrale (non représentée) et cette rotule 191, centrée sur l'axe de changement de pas de la pale correspondante, est entourée par un oeil à rotule 188 d'une pièce de liaison (levier coudé en V) aux extrémités adjacentes de deux tirants voisins raccordés sur cette chape 163, dans les mêmes conditions que dans l'exemple des figures 1 et 2. Dans cet exemple, l'ensemble constitué par la partie d'extrémité radiale interne de la chape 163 et la butée sphérique lamifiée 156 est logé entre les bras radiaux en regard 151 et 152 des plateaux du moyeu, et les évidements 171a et 171b des branches de la chape 163 autorisent les débattements angulaires en battement, en traînée et en pas de la chape 163 avec la pale correspondante, autour du centre de la butée sphérique lamifiée 156, sans interférence de cette chape 163 avec l'armature radiale externe 158, conformée en entretoise, de cette butée lamifiée 156.

Dans toutes les réalisations conformes à l'invention, chacun des tirants permet donc d'introduire dans les mouvements angulaires de traînée des pales entre elles, ou les unes par rapport aux autres, un rappel élastique énergique ainsi qu'un amortissement, ces mouvements angulaires de traînée déphasée étant complètement découplés des mouvements angulaires de pas et de battement, de sorte qu'en particulier les oscillations commandées de changement de pas des pales ne provoquent aucune sollicitation sur les tirants interpales et inversement. De plus, le montage interpale des tirants a plusieurs effets très bénéfiques sur le plan des efforts encaissés et de la résistance, puisque le bras de levier est sensiblement doublé, malgré la compacité du montage, par rapport aux réalisations antérieures, ce qui se traduit par une réduction par deux des efforts transmis et par quatre des rigidités nécessaires dans les tirants. De plus, les rotules et les tirants ne sont plus soumis qu'à de faibles efforts statiques, et le déphasage entre le pas cyclique et le battement des pales supprime une grande partie du rotulage dynamique. L'absence de couplage pas-traînée supprime les efforts induits par les tirants dans la commande de pas, et, par rapport aux réalisations antérieures comportant des contrefiches reliées, d'une part, au pied de la pale ou à l'organe de liaison de la pale au moyeu, et, d'autre part, au moyeu, le nombre de liaisons permettant l'introduction d'efforts sur le moyeu est réduit de moitié, que ce moyeu soit composite ou métallique. De plus, les trous et accidents de forme dans les zones les plus critiques du moyeu sont supprimées, puisque les tirants ne sont pas reliés au moyeu. Ceci est particulièrement intéressant lorsque le moyeu est en matériau composite. En outre, pour ce qui concerne chaque butée sphérique lamifiée retenant et articulant la chape de liaison d'une pale au moyeu, l'effort dynamique axial et l'effort statique de traînée sont supprimés, au détriment de l'effort dynamique de traînée qui est augmenté, sans cependant que cette augmentation soit critique au regard de l'effort dynamique de traînée rencontré sur des rotors modernes à moyeu en matériau composite. La disposition verticale des tirants ayant une forme globale plane, ainsi que leur faible masse, rendent négligeables les effets des efforts centrifuges auxquels ils sont soumis.

Le montage des tirants interpales est également très bénéfique au plan de la fiabilité et de la maintenance, puisque les tirants, de structure simple et pouvant facilement être inspecté visuellement, sont aisément démontables, ainsi que leurs rotules de liaison aux chapes, ces rotules ayant une durée de vie prolongée du fait qu'elles sont moins chargées et qu'elles ne sont soumises qu'à des mouvements de faible amplitude.

En outre, la masse de la tête de rotor peut être réduite, du fait de l'absence d'organe de liaison des tirants au moyeu, du fait de la structure des tirants, en alliage léger et élastomère, du fait du faible rayon d'attache des pales et enfin de l'excentricité de battement réduite, en particulier lorsque la tête de rotor comprend un mât-moyeu tubulaire intégré, dont la jante est relativement proche de l'axe de rotation du rotor, de sorte que la distance séparant les axes de traînée et de battement du centre de rotation du rotor est faible.

Sensiblement pour les mêmes raisons, le coût de réalisation d'une telle tête de rotor est réduit, du fait de l'absence d'organe de liaison des tirants au moyeu, et de la technologie très simple de réalisation des tirants.

Bien que le rayon d'attache des pales puisse être réduit du fait du montage interpale des tirants, le repliage vers l'arrière des quatre ou cinq pales des rotors décrits ci-dessus est possible, sous réserve que des aménagements correspondants soient apportés à la partie inférieure du carénage bombé supérieur de la tête de rotor, lorsqu'un tel carénage est prévu.

En raison du faible rayon d'attache des pales, le maître couple d'une tête de rotor à cinq pales muni de tirants interpales reste relativement faible, de sorte que la traînée aérodynamique est limitée.

On comprend ainsi que le montage des tirants interpales selon l'invention est particulièrement intéressant pour une tête de rotor à quatre ou cinq pales, ou plus encore, en particulier lorsque ces pales sont reliées à un mât-moyeu tubulaire intégré, très compact, et de préférence en matériau composite.

**Revendications**

1. Tête de rotor de giravion, du type comprenant un moyeu (1) auquel chaque pale du rotor est retenue par un organe de liaison (13) solidaire de la pale et relié au moyeu (1) par l'intermédiaire de moyens d'articulation (6) autorisant des oscillations angulaires de la pale autour d'un point unique (C) sur lequel l'axe de battement, l'axe de traînée et l'axe longitudinal (X-X) de changement de pas de la pale sont concourants, la tête de rotor comprenant également un dispositif de liaison interpale, comportant des tirants (29) allongé de rappel élastique avec amortissement incorporé, qui sont en nombre égal aux pales et montés sensiblement en couronne autour du moyeu (1), de sorte que chacun d'eux relie l'une à l'autre deux pales voisines du rotor, chaque tirant (29) comprenant au moins deux organes rigides allongés (30, 31), dont chacun est muni de moyens de liaison articulée (33, 34) d'une extrémité respectivement du tirant (29), à l'une respectivement des deux pales reliées par ce tirant (29), et qui sont reliés l'un à l'autre par au moins un organe de rappel élastique (32) des deux organes rigides (30, 31) vers une position relative initiale et par au moins un organe d'amortissement (32) de tout mouvement relatif des deux organes rigides (30, 31) au moins dans la direction longitudinale du tirant (20), caractérisé en ce que lesdits moyens de liaison articulée (33, 34)à de chaque tirant (29) sur une pale comprennent une rotule principale (41), dont le centre est situé sur ou à proximité immédiate de l'axe longitudinal de pas (X-X) de la pale, et qui est retenue sur l'organe de liaison (13) de la pale au moyeu (1) radialement à l'extérieur, par rapport au centre (A) du moyeu (1), du point d'intersection (C) des axes de traînée, de battement et de changement de pas, qui constitue le centre d'articulation unique de l'organe de liaison (13) sur le moyeu (1).

2. Tête de rotor selon la revendication 1, caractérisée en ce que lesdits moyens d'articulation de l'organe de liaison (13) d'une pale sur le moyeu (1) comprennent une articulation-butée (6) de type sphérique lamifié, constituant simultanément l'organe de retenue de la pale à l'encontre de la force centrifuge et une articulation de battement, une articulation de traînée et une articulation de pas, et dont le centre (C) est à l'intersection des axes de battement, de traînée et de pas de la pale correspondante.

3. Tête de rotor selon l'une des revendications 1 et 2, caractérisée en ce que les moyens de liaison articulée de deux tirants (29) voisins sur une même pale comprennent une unique rotule princpale (41), dont le centre est situé sur l'axe de changement de pas (X-X) de la pale.

4. Tête de rotor selon la revendication 3, caractérisée en ce que ladite rotule principale unique (41) est liée aux extrémités adjacentes de deux tirants voisins (29) par une pièce de liaison rigide (35) comportant deux bras (36, 37) inclinés radialement vers le moyeu (1) et latéralement l'un d'un côté et l'autre de l'autre côté de l'axe (X-X) de pas de la pale, les deux bras (36, 37) se rattachant l'un à l'autre par un oeil à rotule (38) entourant la rotule principale (41) et l'extrémité libre de l'un (37) des bras (36, 37) étant liée à l'extrémité adjacente du tirant (29) situé du côté correspondant de l'axe de pas (X-X) de la pale par des moyens de liaison (33, 40) assurant une liaison articulée (44) secondaire, de sorte qu'en position relative initiale des organes rigides (30, 31) de chaque tirant (29), les centres des rotules principales (41) de liaison de chaque tirant (29) aux deux pales correspondantes et le centre de la liaison articulée secondaire (44) de chaque tirant (29) au bras (37) correspondante des pièces de liaison (35) aux deux pales correspondantes sont alignés sensiblement sur l'axe longitudinal du tirant (29).

5. Tête de rotor selon la revendication 4, caractérisée en ce que la pièce de liaison (35) à la forme d'un V ouvert vers le moyeu (1) et dont l'extrémité libre de l'un des bras (37) est conformée en chape de pivotement (40) sur l'extrémité adjacente d'un tirant (29), l'axe de pivotement de la chape (40) de l'extrémité du bras (37) étant parallèle à l'axe de traînée de la pale correspondante.

6. Tête de rotor selon la revendication 5, caractérisée en ce qu'un oeil de liaison (33) solidaire de l'un (30) des organes rigides d'un tirant (29) est engagée et retenu entre les deux branches d'une chape d'extrémité (40) d'un bras (37) d'une pièce de liaison (35), dont l'autre bras (36) présente un embout (39) qui est engagé et solidarisé aux deux branches d'une chape de liaison (34) solidaire d'au moins un autre organe rigide (31) d'un tirant voisin (29).

7. Tête de rotor selon la revendication 6, caractérisée en ce que ledit oeil de liaison (33) d'un tirant (29) est retenu dans la chape d'extrémité (40) d'un bras (37) d'une pièce de liaison (35) par une rotule secondaire en élastomère lamifiée (44).

8. Tête de rotor selon l'une des revendications 1 et 2, caractérisée en ce que les moyens de liaison articulée de chacun de deux tirants voisins (29') sur une même pale (45) comprennent l'une respectivement de deux rotules principales (41$\underline{a}$, 41$\underline{b}$) disposées sur l'organe de liaison correspondant (13') symétriquement de part et d'autre de l'axe de changement de pas (X-X) de la pale, chacune de ces rotules (41$\underline{a}$, 41$\underline{b}$) étant reliée au tirant (29') situé du même côté de l'axe de changement de pas (X-X) que la rotule considérée par un oeil à rotule (38', 40') qui entoure la rotule considérée (41$\underline{a}$, 41$\underline{b}$) et n'est séparé de l'autre oeil à rotule que par un faible jeu transversal, perpendiculairement à l'axe de changement de pas (X-X) de la pale (45).

9. Tête de rotor selon l'une des revendications 1, 2 et 8, caractérisée en ce que les moyens de liaison articulée de chacun de deux tirants (89) voisins sur une même pale comprennent l'une respectivement de deux rotules principales (101$\underline{a}$, 101$\underline{b}$) disposées sur l'organe de liaison correspondant (73) dans des positions décalées radialement selon l'axe de changement de pas (X-X-) de la pale, chacune de ces rotules (101$\underline{a}$, 101$\underline{b}$) étant reliée à l'un respectivement desdits tirants voisins (89) par un oeil à rotule (98, 100) qui l'entoure.

10. Tête de rotor selon la revendication 9, caractérisée en ce que lesdites rotules principales (101$\underline{a}$, 101$\underline{b}$) sont décalées radialement le long de l'axe de changement de pas (X-X) de la pale et sont chacune centrées sur cet axe.

11. Tête de rotor selon l'une des revendications 9 et 10, caractérisée en ce que la rotule principale (101$\underline{b}$) de liaison d'une extrémité (93) de chaque tirant (89) à l'organe de liaison (73) d'une pale au moyeu (61) est radialement à l'extérieur de l'autre rotule principale (101$\underline{a}$) retenue sur l'organe de liaison (73) de la pale au moyeu (61), tandis que la rotule principale de liaison (101a) de l'autre extrémité du tirant (89) à l'organe de liaison (73) d'une pale voisine au moyeu (61) est radialement à l'intérieur de l'autre rotule principale (101b) retenue sur l'organe de liaison de la pale voisine au moyeu.

12. Tête de rotor selon l'une des revendications 8 à 11, caractérisé en ce qu'au moins un oeil à rotule (100) retenu sur un organe de liaison (73) d'une pale au moyeu (61) par l'une (101b) des deux rotules principales correspondantes est directement solidaire de l'un (90) au moins des deux organes rigides (90, 91) du tirant (89) articulé sur ledit organe de liaison (73) par la rotule principale correspondante (101b).

13. Tête de rotor selon l'une des revendications 8 à 12, caractérisée en ce qu'au moins un oeil à rotule (98) retenu sur un organe de liaison (73) d'une pale au moyeu (61) par l'une (101a) des deux rotules principales correspondantes présente un bras de liaison (96) solidarisé à au moins un organe rigide (91) du tirant (89) relié audit organe de liaison (73) par la rotule principale correspondante (101a).

14. Tête de rotor selon l'une des revendications 1 à 13, caractérisée en ce que chaque tirant (29) comprend une plaque allongée plane rigide et centrale (30), engagée au moins partiellement entre deux plaques planes rigides et externes (31) allongées dans la même direction, à chacune desquelles la plaque centrale (30) est liée par une couche d'un matériau visco-élastique (31) adhérisé aux deux plaques qu'elle relie, la plaque centrale (30) présentant un embout à oeil de pivotement (33) s'étendant d'un côté, dans la direction des plaques allongée (30, 31), au-delà des plaques externes (31), tandis que les plaques externes (31) présentent, de l'autre côté dans la direction des plaques allongée et au-delà de la plaque interne (30), une chape de fixation (34) par au moins deux boulons à un embout (39) d'un bras de liaison (36) à une rotule principale (38), chaque tirant (29) étant monté entre deux pales de sorte que le plan des plaques (30, 31) soit essentiellement parallèle aux axes de traînée des deux pales.

15. Tête de rotor selon l'une des revendications 1 à 14, caractérisée en ce que chaque organe de liaison (13) d'une pale au moyeu (1) supporte, radialement à l'intérieur de chaque rotule principale (41) qu'il retient, deux pattes (21, 23) en saillie latérale par rapport à l'organe de liaison (13) et s'étendant l'une d'un côté et l'autre de l'autre côté de l'axe de changement de pas (X-X) de la pale correspondante, chacune des deux pattes latérales (21, 23) présentant une surface de butée (22, 24), tournée vers le moyeu (1), et destinée à venir en appui contre l'une de deux surfaces de butée de traînée (27, 28) tournées vers l'extérieur du moyeu (1) et vers le bout de la pale correspondante, et ménagées chacune sur l'un respectivement de deux bossages en saillie sur la face radiale externe du moyeu (1) et latéralement de part et d'autre dudit organe de liaison (13) et des moyens d'articulation correspondants (6), afin de limiter les débattements en traînée de la pale au démarrage et à l'arrêt de la rotation du rotor, par appui direct de la surface de butée (22, 24) d'une patte latérale (21, 23) contre une surface de butée de traînée (27, 28) du moyeu (1).

16. Tête de rotor selon la revendication 15, caractérisée en ce que l'une des deux pattes latérales (21, 23) de chaque organe de liaison (13) se prolonge latéralement au-delà de la surface de butée correspondante (24) et est conformée en levier de commande (23) du pas de la pale correspondante.

17. Tête de rotor selon l'une des revendications 1 à 16, caractérisée en ce que chaque organe de liaison d'une pale au moyeu (1) est une chape radiale (13) comprenant une branche supérieur (14a) et une branche inférieure (14b) qui sont disposées en regard l'une de l'autre et espacées l'une de l'autre dans la direction de l'axe de traînée de la pale correspondante, et dont les extrémités radiales externes (17a, 17b) sont d'une seule pièce avec le pied de la pale correspondante, qui est fourchu, ou retiennent entre elles le pied de la pale correspondante, tandis que leurs extrémités radiales internes sont solidarisées à une armature radiale interne (9) des moyens d'articulation (6) sur le moyeu (1), qui comprennent également une armature radiale externe (8) fixée sur une partie (2) du moyeu (1) et disposée entre les deux branches (14a, 14b) de la chape (13), chacune des rotules principales correspondantes (41) étant retenue et logée essentiellement entre les deux branches (14a, 14b) de la chape (13), radialement entre leurs extrémités radiales externes et l'armature radiale externe (8) également disposée entre elles.

18. Tête de rotor selon la revendication 17, caractérisée en ce que chaque rotule principale (41) est, d'une part, logée entre deux bossages (43) en saillie chacun vers l'autre sur la face de l'une respectivement des branches (14a, 14b) de chape (13) qui est tournée vers l'autre branche et, d'autre part, retenue par une broche (42) diamétrale, d'axe parallèle à l'axe de traînée de la pale, et qui traverse la rotule (41) et les bossages (43) et est fixée sur les deux branches (14a, 14b).

19. Tête de rotor selon la revendication 17, telle que rattachée à l'une des revendications 8 et 9, caractérisée en ce que chaque rotule principale (141a, 141b) est logée dans une pièce (143) montée en entretoise entre les deux branches (114a, 114b) de la chape (113) et présentant au moins un logement à rotule (144a, 144b), s'ouvrant latéralement vers un côté de la chape (113) et vers le moyeu, et dans lequel une rotule principale (141a, 141b) est retenue autour d'un axe diamétral (142a, 142b) perpendiculaire à l'axe de traînée de la pale et sensiblement perpendiculaire à l'axe longitudinal du tirant (129) que cette rotule (141a, 141b) relie à la chape (113)

20. Tête de rotor selon la revendication 19, caractérisée en ce que chacune des deux rotules principales (141a, 141b) est logée et retenue dans l'une respectivement de deux pièces distinctes montées en entretoises entre les deux branches (114a, 114b) de la chape (113).

21. Tête de rotor selon l'une des revendications 17 à 20, telle que rattaché à l'une des revendications 15 et 16, caractérisée en ce que les deux pattes latérales (21, 23) présentent les surfaces de butée (22, 24) et, le cas échéant, le levier de commande de pas, sont réalisées d'une seule pièce (19) qui est montée en entretoise entre les branches (14a, 14b) de la chape (13) auxquelles elle est fixée dans une position radiale entre la ou les rotules principales (41) et la partie (2) du moyeu (1) à laquelle est fixée l'armature radiale externe (8) des moyens d'articulation correspondant (6).

22. Tête de rotor selon l'une des revendications 1 à 21 caractérisée en ce qu'elle comprend un moyeu (1) comportant une jante (2) rigide périphérique, de forme circulaire ou sensiblement polygonale à côtés/ou sommets arrondis, et solidaire en rotation d'un mât-rotor autour de l'axe de rotation (A) du rotor, et en ce que lesdits moyens d'articulation de chaque organe de liaison (13) d'une pale au moyeu (1) sont essentiellement logés à l'intérieur de la jante (2) et rattachent ledit organe de liaison (13) à une partie de ladite jante (2) du moyeu (1).

23. Tête de rotor selon la revendication 22, caractérisée en ce qu'elle comprend un mât-moyeu tubulaire intégré (51) présentant ladite jante (52) dans sa partie supérieure et, pour chaque pale (45), au moins une ouverture (54) percée dans le mât-moyeu (51) en position sensiblement adjacente à la jante (52), et traversée par une partie de l'organe de liaison correspondante (13), afin de relier la pale (45) à l'extérieur du mât-moyeu (51) aux moyens d'articulation correspondants (6), à l'intérieur du mât-moyeu (51).

24. Tête de rotor selon l'une des revendications 22 et 23, caractérisée en ce qu'elle comporte un carénage (55) bombé et supérieur, recouvrant la partie supérieure du moyeu (51), et présentant des évidements (56) de passage des organes de liaison (13) des pales au moyeu (51), ledit carénage (55) étant de préférence monté flottant sur la couronne des tirants (29) en étant raccordé par des silent blocs (58) à sa périphérie à des bras (36') de liaison de tirants (29) aux rotules principales (41) correspondantes.

25. Tête de rotor selon l'une des revendications 1 à 21, caractérisée en ce elle comprend un moyeu comportant un plateau sensiblement radial (62) de forme sensiblement circulaire ou sensiblement polygonale à côtés/ou sommets arrondis, et solidaire en rotation d'un mât-rotor autour de l'axe de rotation (A) du rotor, le plateau (62) étant percé d'évidements (65) en nombre égal aux pales, et les moyens d'articulation (66) de l'organe de liaison (73) d'une pale au moyeu (61) étant au moins partiellement logés dans l'évidement correspondant (65), et en appui contre le bord radial externe (64) de cet évidement (65), en étant reliés à la pale par une partie supérieure (74a) et une partie inférieure (74b) dudit organe de liaison (73), qui s'étendent respectivement au-dessus et au-dessous du plateau (62).

26. Tête de rotor selon l'une des revendications 1 à 21, caractérisée en ce qu'elle comprend un moyeu comportant deux plateaux (151, 152) sensiblement radiaux, solidaires en rotation d'un mât-rotor autour de l'axe de rotation du rotor, et espacés l'un de l'autre dans la direction de l'axe de rotation du rotor, de sorte qu'ils présentent, pour chaque pale, deux parties radiales externes de plateau (151, 152), en regard l'une de l'autre, et entre lesquelles sont retenus les moyens d'articulation (156) de l'organe de liaison (163) correspondant au moyeu ainsi qu'au moins une partie radiale interne dudit organe de liaison (163).

**Patentansprüche**

1. Drehflügelflugzeug-Rotorkopf eines Typs, der eine Nabe (1) umfaßt, an der jedes Rotorblatt von einem Verbindungselement (13) gehalten wird, das mit dem Blatt fest verbunden ist und mittels Gelenkmitteln (6) mit der Nabe (1) verbunden ist, wobei die Gelenkmittel(6) Winkelauslenkungen des Blattes um einen einzigen Punkt (C) zulassen, durch den die Schlagachse, die Sogachse und die Längsachse (X-X) der Änderung des Blattanstellwinkels verlaufen, wobei der Rotorkopf außerdem eine Einrichtung zur Verbindung der Blätter untereinander umfaßt, die langgestreckte elastische Rückstellstreben (29) mit eingebauter Dämpfung aufweist, deren Anzahl gleich derjenigen der Blätter ist und die im wesentlichen kranzförmig um die Nabe (1) angebracht sind, derart, daß jede von ihnen zwei benachbarte Blätter des Rotors miteinander verbindet, wobei jede Strebe (29) wenigstens zwei langgestreckte starre Elemente (30, 31) umfaßt, von denen jedes mit Mitteln zur Gelenkverbindung (33, 34) eines entsprechenden Endes der Strebe (29) mit einem entsprechenden der zwei mit dieser Strebe (29) verbundenen Blätter versehen ist, die miteinander über wenigstens ein elastisches Element zum Rückstellen (32) der zwei starren Elemente (30, 31) in eine relative Anfangsposition und über wenigstens ein Element zum Dämpfen (32) jeglicher Relativbewegung der zwei starren Elemente (30, 31) wenigstens in der Längsrichtung der Strebe (29) verbunden sind, dadurch gekennzeichnet, daß die Mittel zur Gelenkverbindung (33, 34) einer jeden Strebe (29) auf jedem Blatt ein Hauptkugelgelenk (41) umfassen, dessen Zentrum sich auf der Anstellwinkellängsachse (X-X) des Blattes oder in unmittelbarer Nähe derselben befindet und am Element zur Verbindung (13) des Blattes mit der Nabe (1) in radialer Richtung in bezug auf das Zentrum (A) der Nabe (1) außerhalb des Schnittpunktes (C) der Sog-, der Schlag- und der Anstellwinkeländerungsachse, der das einzige Drehzentrum des Elementes zur Verbindung (13) an der Nabe (1) bildet, gehalten wird.

2. Rotorkopf gemäß Anspruch 1, dadurch gekennzeichnet, daß die Gelenkmittel des Elementes zur Verbindung (13) eines Blattes an der Nabe (1) ein Gelenk-Widerlager (6) eines sphärischen Schichttyps umfassen, das gleichzeitig das Element zum Halten des Blattes gegen die Zentrifugalkraft und ein Schlaggelenk, eine Soganlenkung und eine Anstellwinkelanlenkung bildet, so daß das Zentrum (C) im Schnittpunkt der Schlag-, der Sog- und der Anstellwinkelachse des entsprechenden Blattes liegt.

3. Rotorkopf gemäß einem der Ansprüche 1 und 2, dadurch gekennzeichnet, daß die Gelenkverbindungsmittel zweier Streben (29), die auf demselben Blatt benachbart sind, ein einziges Hauptkugelgelenk (41) umfassen, dessen Zentrum auf der Anstellwinkeländerungsachse (X-X) des Blattes liegt.

4. Rotorkopf gemäß Anspruch 3, dadurch gekennzeichnet, daß das einzige Hauptkugelgelenk (41) über ein starres Verbindungsteil (35) mit den aneinandergrenzenden Enden zweier benachbarter Streben (29) verbunden ist, wobei das starre Verbindungsteil (35) zwei Arme (36, 37) aufweist, von denen in radialer Richtung beide zur Nabe (1) und in seitlicher Richtung der eine zur einen Seite und der andere zur anderen Seite der Anstellwinkelachse (X-X) des Blattes geneigt ist, wobei die zwei Arme (36, 37) mittels eines das Hauptkugelgelenk (41) umgebenden Kugelgelenkauges (38) aneinander angesetzt sind und das freie Ende eines (37) der Arme (36, 37) mit dem angrenzenden Ende der an der entsprechenden Seite der Anstellwinkelachse (X-X) des Blattes befindlichen Strebe durch Verbindungsmittel (33, 40) verbunden ist, die eine sekundäre Gelenkverbindung (44) gewährleisten, derart, daß in der relativen Anfangsposition der starren Elemente (30, 31) einer jeden Strebe (29) die Zentren der Hauptkugelgelenke (41) der Verbindung einer jeden Strebe (29) mit den entsprechenden Blättern und das Zentrum der sekundären Gelenkverbindung (44) einer jeden Strebe (29) am jeweiligen Arm (37) der zwei entsprechenden Blättern zugehörigen Verbindungsteile (35) im wesentlichen auf der Längsachse der Strebe (29) ausgerichtet sind.

5. Rotorkopf gemäß Anspruch 4, dadurch gekennzeichnet, daß das Verbindungsteil (35) die Form eines zur Nabe (1) geöffneten V besitzt, von dem das freie Ende eines der Arme (37) einem Schwenkbügel (40) am angrenzenden Ende einer Strebe (29) entspricht, wobei die Schwenkachse des Bügels (40) des Endes des Arms (37) zur Sogachse des entsprechenden Blattes parallel ist.

6. Rotorkopf gemäß Anspruch 5, dadurch gekennzeichnet, daß ein mit einem (30) der starren Elemente einer Strebe (29) verbundendes Verbindungsauge (33) zwischen den zwei Schenkeln eines Endbügels (40) eines Arms (37) eines Verbindungsteils (35) in Eingriff ist und gehalten wird, wobei der andere Arm (36) des Verbindungsteils (35) einen Ansatz (39) aufweist, der mit den zwei Schenkeln eines mit wenigstens einem anderen starren Element (31) einer benachbarten Strebe (29) verbundenen Verbindungsbügels (34) in Eingriff und mit diesen verbunden ist.

7. Rotorkopf gemäß Anspruch 6, dadurch gekennzeichnet, daß das Verbindungsauge (32) einer Strebe (29) im Endbügel (40) eines Arms (37) eines Verbindungsteils (35) von einem sekundären Kugelgelenk aus einem Schichtelastomer (44) gehalten wird.

8. Rotorkopf gemäß einem der Ansprüche 1 und 2, dadurch gekennzeichnet, daß die Gelenkverbindungsmittel einer jeden von zwei auf demselben Blatt (45) benachbarten Streben (29') jeweils eines von zwei Hauptkugelgelenken (41a, 41b), die am entsprechenden Verbindungselement (13') symmetrisch auf beiden Seiten der Achse der Änderung des Anstellwinkels (X-X) des Blattes angeordnet sind, umfassen, wobei jedes dieser Kugelgelenke (41a, 41b) mit einer auf der gleichen Seite der Achse der Änderung des Anstellwinkels (X-X) wie das betrachtete Kugelgelenk befindlichen Strebe (29') mittels eines das betrachtete Kugelgelenk (41a, 41b) umgebenden Kugelgelenkauges (38', 40') verbunden ist und vom anderen Kugelgelenkauge nur durch ein geringes transversales Spiel senkrecht zur Achse der Änderung des Anstellwinkels (X-X) des Blattes (45) getrennt ist.

9. Rotorkopf gemäß einem der Ansprüche 1, 2 und 8, dadurch gekennzeichnet, daß die Gelenkverbindungsmittel einer jeden von zwei auf demselben Blatt benachbarten Streben (89) jeweils eines von zwei Hauptkugelgelenken (101a, 101b) umfassen, die am entsprechenden Verbindungselement (73) in Positionen, die entlang der Achse der Änderung des Anstellwinkels (X-X) des Blattes radial versetzt sind, angeordnet sind, wobei jedes dieser Kugelgelenke (101a, 101b) mit jeweils einer der benachbarten Streben (89) mittels eines sie umgebenden Kugelgelenkauges (98, 100) verbunden ist.

10. Rotorkopf gemäß Anspruch 9, dadurch gekennzeichnet, daß die Hauptkugelgelenke (101a, 101b) in radialer Richtung entlang der Achse der Änderung des Anstellwinkels (X-X) des Blattes versetzt sind und jeweils auf dieser Achse zentriert sind.

11. Rotorkopf gemäß einem der Ansprüche 9 und 10, dadurch gekennzeichnet, daß sich das Hauptkugelgelenk (101b) zur Verbindung eines Endes (93) einer jeden Strebe (89) mit dem Element zur Verbindung (73) eines Blattes an der Nabe (61) in radialer Richtung außerhalb des anderen Hauptkugelgelenks (101a) befindet, das am Element zur Verbindung (73) des Blattes an der Nabe (61) gehalten wird, während sich das Hauptkugelgelenk zur Verbindung (101a) des anderen Endes der Strebe (89) am Element zur Verbindung (73) eines benachbarten Blattes an der Nabe (61) in radialer Richtung innerhalb des anderen Hauptkugelgelenks (101b) befindet, das am Element zur Verbindung des benachbarten Blattes an der Nabe gehalten wird.

12. Rotorkopf gemäß einem der Ansprüche 8 bis 11, dadurch gekennzeichnet, daß das Kugelgelenkauge (100), das mittels eines (101b) der zwei entsprechenden Hauptkugelgelenke am Element zur Verbindung (73) eines Blattes an der Nabe (61) gehalten wird, direkt mit wenigstens einem (90) der zwei starren Elemente (90, 91) der Strebe (89), das am Verbindungaslement (73) mittels des entsprechenden Hauptkugelgelenks (101b) angelenkt ist, verbunden ist.

13. Rotorkopf gemäß einem der Ansprüche 8 bis 12, dadurch gekennzeichnet, daß wenigstens ein Kugelgelenkauge (98), das am Element zur Verbindung (73) eines Blattes mit der Nabe (61) mittels eines (101a) von zwei entsprechenden Hauptkugelgelenken gehalten wird, einen Verbindungsarm (96) aufweist, der mit wenigstens einem starren Element (91) der Strebe (89) verbunden ist, die mit dem Verbindungselement (73) mittels des entsprechenden Hauptkugelgelenks (101a) verbunden ist.

14. Rotorkopf gemäß einem der Ansprüche 1 bis 13, dadurch gekennzeichnet, daß jede Strebe (29) eine langgestreckte, ebene, starre und zentrale Platte (30) umfaßt, die wenigstens teilweise zwischen zwei in derselben Richtung langgestreckten, ebenen, starren und äußeren Platten (31) in Eingriff ist, wobei die zentrale Platte (30) über eine Schicht aus einem viskoelastischen Material (31), die an die zwei durch sie verbundenen Platten angeklebt ist, mit jeder der äußeren Platten verbunden ist und einen Ansatz mit einem Gelenkauge (33) aufweist, der sich auf einer Seite in Richtung der langgestreckten Platten (30, 31) über die äußeren Platten (31) hinaus erstreckt, während die äußeren Platten (31) auf der anderen Seite in Richtung der langgestreckten Platten und über die innere Platte (30) hinaus einen Bügel zur Befestigung (34) mittels zweier Bolzen an einem Ansatz (39) eines Verbindungsarms (36) mit einem Hauptkugelgelenk (38) aufweisen, wobei jede Strebe (29) zwischen zwei Blättern angebracht ist, derart, daß die Ebene der Platten (30, 31) zu den Sogachsen der zwei Blätter im wesentlichen parallel ist.

15. Rotorkopf gemäß einem der Ansprüche 1 bis 14, dadurch gekennzeichnet, daß jedes Element zur Verbindung (13) eines Blattes mit der Nabe (1) in radialer Richtung innerhalb eines jeden von ihm getragenen Hauptkugelelementes (41) zwei in bezug auf das Verbindungselement (13) seitlich vorstehende Haken (21, 23) trägt, von denen sich einer auf einer Seite und der andere auf der anderen Seite der Achse der Änderung des Anstellwinkels (X-X) des entsprechenden Blattes erstreckt, wobei jeder der zwei seitlichen Haken (21, 23) eine Anschlagfläche (22, 24) aufweist, die zur Nabe (1) gerichtet ist und dazu vorgesehen ist, sich gegen eine von zwei Soganschlagflächen (27, 28) abzustützen, die von der Nabe (1) nach außen und zum Endstück des entsprechenden Blattes gerichtet sind und jeweils auf einem von zwei auf der radialen Außenseite der Nabe (1) und auf beiden Seiten eines entsprechenden Verbindungselementes (13) und der entsprechenden Gelenkmittel (6) vorspringenden Höckern angeordnet sind, um durch die direkte Abstützung der Anschlagfläche (22, 24) eines seitlichen Hakens (21, 23) gegen eine Soganschlagfläche (27, 28) der Nabe (1) die Sogauslenkungen des Blattes beim Starten und beim Anhalten der Rotordrehung zu begrenzen.

16. Rotorkopf gemäß Anspruch 15, dadurch gekennzeichnet, daß einer der zwei seitlichen Haken (21, 23) eines jeden Verbindungselementes (13) in Seitenrichtung über die entsprechende Anschlagfläche (24) hinaus verlängert ist und als Stellhebel (23) für den Anstellwinkel des entsprechenden Blattes ausgebildet ist.

17. Rotorkopf gemäß einem der Ansprüche 1 bis 16, dadurch gekennzeichnet, daß jedes Element zur Verbindung eines Blattes mit der Nabe (1) ein radialer Bügel (13) ist, der einen oberen Schenkel (14a) und einen unteren Schenkel (14b) umfaßt, die einander gegenüber angeordnet sind und sich in Richtung der Sogachse des entsprechenden Blattes in einem gegenseitigen Abstand befinden und deren in radialer Richtung äußere Enden (17a, 17b) aus einem Stück mit dem gegabelten Fußende des entsprechenden Blattes gebildet sind oder das Fußende des entsprechenden Blattes zwischen sich halten, während ihre in radialer Richtung inneren Enden mit einem in radialer Richtung inneren Beschlag (9) der Gelenkmittel (6) an der Nabe (1) verbunden sind, wobei die Gelenkmittel (6) außerdem einen in radialer Richtung äußeren Beschlag (8) umfassen, der an einem Teil (2) der Nabe (1) befestigt ist und zwischen den zwei Schenkeln (14a, 14b) des Bügels (13) angeordnet ist, wobei jedes der entsprechenden Hauptkugelgelenke (41) im wesentlichen zwischen den zwei Schenkeln (14a, 14b) des Bügels (13) in radialer Richtung zwischen ihren in radialer Richtung äußeren Enden und dem ebenfalls zwischen ihnen angeordneten radialen Außenbeschlag (8) gehalten und aufgenommen wird.

18. Rotorkopf gemäß Anspruch 17, dadurch gekennzeichnet, daß jedes Hauptkugelgelenk (41) einerseits zwischen zwei Höckern (43) aufgenommen wird, die auf der zum jeweils anderen Schenkel weisenden Seite eines der zwei Schenkel (14a, 14b) des Bügels (13) zum jeweils anderen Höcker vorstehen, und andererseits von einem diametralen Dorn (42) mit einer zur Sogachse des Blattes parallelen Achse gehalten wird, der das Kugelgelenk (41) und die Höcker (43) durchsetzt und an den zwei Schenkeln (14a, 14b) befestigt ist.

19. Rotorkopf gemäß Anspruch 17 sowie in Verbindung mit einem der Ansprüche 8 und 9, dadurch gekennzeichnet, daß jedes Hauptkugelgelenk (141a, 141b) in einem als Verstrebung zwischen den zwei Schenkeln (114a, 114b) des Bügels (113) angebrachten Stück (143) aufgenommen wird, das wenigstens einen Kugelgelenksitz (144a, 144b) aufweist, der sich in seitlicher Richtung zu einer Seite des Bügels (113) und zur Nabe öffnet und in dem ein Hauptkugelgelenk (141a, 141b) um eine diametrale Achse (142a, 142b) gehalten wird, die senkrecht zur Sogachse des Blattes und im wesentlichen senkrecht zur Längsachse der dieses Kugelgelenk (141a, 141b) mit dem Bügel (113) verbindenden Strebe (129) ist.

20. Rotorkopf gemäß Anspruch 19, dadurch gekennzeichnet, daß jedes der zwei Hauptkugelgelenke (141a, 141b) in jeweils einem von zwei verschiedenen Stücken aufgenommen und gehalten wird, die als Verstrebung zwischen den zwei Schenkeln (114a, 114b) des Bügels (113) angebracht sind.

21. Rotorkopf gemäß einem der Ansprüche 17 bis 20 sowie in Verbindung mit einem der Ansprüche 15 und 16, dadurch gekennzeichnet, daß die zwei die Anschlagflächen (22, 24) und gegebenenfalls den Anstellwinkel-Stellhebel aufweisenden seitlichen Haken (21, 23) aus einem Stück (19) verwirklicht sind, das als Verstrebung zwischen den Schenkeln (14a, 14b) des Bügels (13) angebracht ist, an denen es an einer Position befestigt ist, die sich in radialer Richtung zwischen dem oder den Hauptkugelgelenk(en) (41) und demjenigen Teil (2) der Nabe (1) befindet, an dem der in radialer Richtung äußere Beschlag (8) der entsprechenden Gelenkmittel (6) befestigt ist.

22. Rotorkopf gemäß einem der Ansprüche 1 bis 21, dadurch gekennzeichnet, daß er eine Nabe (1) umfaßt, die an ihrem Umfang eine starre Felge (2) aufweist, die kreisförmig oder im wesentlichen polygonal mit abgerundeten Seiten/oder Ecken ist und mit einem um die Drehachse (A) des Rotors drehbaren Rotormast drehfest verbunden ist, und daß die Gelenkmittel eines jeden Elements zur Verbindung (13) eines Blattes mit der Nabe (1) im wesentlichen im Inneren der Felge (2) aufgenommen werden und das Verbindungselement (13) mit einem Teil der Felge (2) der Nabe (1) verbinden.

23. Rotorkopf gemäß Anspruch 22, dadurch gekennzeichnet, daß er einen integralen röhrenförmigen Nabenmast (51) umfaßt, der in seinem oberen Teil die Felge (52) und für jedes Blatt (45) wenigstens eine Öffnung (54) aufweist, die im Nabenmast (51) an einer im wesentlichen an die Felge (52) angrenzenden Position ausgespart ist und von einem Teil des entsprechenden Verbindungselementes (13) durchsetzt wird, um das Blatt (45) außerhalb des Nabenmastes (51) mit den entsprechenden Gelenkmitteln im Inneren des Nabenmastes (51) zu verbinden.

24. Rotorkopf gemäß einem der Ansprüche 22 und 23, dadurch gekennzeichnet, daß er eine gewölbte und obere Verkleidung (55) aufweist, die den oberen Teil der Nabe (51) abdeckt und Aussparungen (56) für den Durchgang der Elemente zur Verbindung (13) der Blätter mit der Nabe (51) aufweist, wobei die Verkleidung (55) vorzugsweise lose auf dem Kranz der Streben (29) angebracht ist, indem sie mittels an ihrem Umfang befindlicher Silentblocs (58) mit den Armen (36') zur Verbindung der Streben (29) mit den entsprechenden Hauptkugelgelenken (41) verbunden ist.

25. Rotorkopf gemäß einem der Ansprüche 1 bis 21, dadurch gekennzeichnet, daß er eine Nabe umfaßt, die eine im wesentlichen radiale Scheibe (62) aufweist, die im wesentlichen kreisförmig oder im wesentlichen polygonal mit abgerundeten Seiten-/oder Ecken ist und mit einem um die Drehachse (A) des Rotors sich drehenden Rotormast drehfest verbunden ist, wobei die Scheibe (62) von Aussparungen (65) durchsetzt wird, deren Anzahl gleich derjenigen der Blätter ist, und wobei die Gelenkmittel (66) des Elementes zur Verbindung (73) eines Blattes mit der Nabe (61) wenigstens teilweise in der entsprechenden Aussparung (65) aufgenommen werden und sich gegen den in radialer Richtung äußeren Rand (64) dieser Aussparung (65) abstützen, indem sie mittels eines oberen Teils (74a) und eines unteren Teils (74b) des Verbindungselements (73), die sich jeweils oberhalb und unterhalb der Scheibe (62) erstrecken, mit dem Blatt verbunden sind.

26. Rotorkopf gemäß einem der Ansprüche 1 bis 21, dadurch gekennzeichnet, daß er eine Nabe umfaßt, die zwei im wesentlichen radiale Scheiben (151, 152) aufweist, die mit einem um die Drehachse des Rotors sich drehenden Rotormast drehfest verbunden sind und sich in Richtung der Drehachse des Rotors in gegenseitigem Abstand befinden, derart, daß sie für jedes Blatt zwei in radialer Richtung äußere Teile der Scheibe (151, 152) aufweisen, die einander gegenüberliegen und zwischen denen die Gelenkmittel (156) des entsprechenden Elementes zur Verbindung (163) mit der Nabe sowie wenigstens ein in radialer Richtung innerer Teil des Verbindungselementes (163) gehalten werden.

**Claims**

1. A rotary-wing aircraft rotor head, of the type comprising a hub (1) to which each blade of the rotor is held by a connection member (13) fixed to the blade and connected to the hub (1) with the aid of articulation means (6) permitting angular oscillations of the blade about a single point (C) on which the flapping axis, the lag axis and the longitudinal pitch (X-X) change axis of the blade are convergent, the rotor head also comprising an interblade connection devis consisting of elongated resilient-return ties (29) with built-in damping, the number of which ties is equal to that of the blades and which are mounted substantially in a ring around the hub (1), so that each of them connects together two neighboring blades of the rotor, each tie (29) comprising at least two rigid elongated members (30, 31), each of which is provided which means for the articulated connection (33, 34) of a respective end of the tie (29) to a respective one of the two blades connected bi said tie (29), and which are connected to one another by at least one resilient-return member (32) of the two rigid members (30, 31), for return to a relative initial position, and by at least one member damping (32) all relative movement of the two rigid members (30, 31), at least in the longitudinal direction of the tie (29), characterized in that said means for the articulated connection (33, 34) of each tie (29) to a blade comprise a main ball (41) whose center is situated on or in immediate proximity to the longitudinal pitch axis (X-X) of the blade and which is retained, on the means connecting (13) the blade to the hub (1), radially on the outside, relative to the center (A) of the hub (1), of the point of intersection (C) of the lag, flapping and pitch change axes, which point constitutes the single center of articulation of the connection means (13) on the hub (1).

2. A rotor head as claimed in claim 1, characterized in that said means articulating the connection (13) member of a blade on the hub (1) comprise a thrust bearing articulation (6) of the laminated spherical type constituting at one and the same time the member retaining the blade against centrifugal force and a flapping articulation, a lag articulation, and a pitch articulation, with its center (C) at the intersection of the flapping, lag and pitch axes of the corresponding blade.

3. A rotor head as claimed in claim 1 characterized in that the means for the articulated connection of two neighboring ties (29) on one and the same blade comprise a single main ball (41) whose center is situated on the pitch change axis (X-X) of the blade.

4. A rotor head as claimed in claim 3, characterized in that said single main ball (41) is connected to the adjacent ends of two neighboring ties (29) by a rigid connection member (35) comprising two arms (36, 37) radially inclined toward the hub (1) and disposed laterally one on one side and the other one the other side of the pitch change axis (X-X) of the blade, the two arms (36, 37) being attached to one another by a ball eye (38) surrounding the main ball (41), and the free end of one (37) of the arms (36, 37) being connected to the adjacent end of the tie (29) situated on the corresponding side of the pitch axis (X-X) of the blade by connection means (33, 40) making a secondary articulated connection (44) in such a manner that in the relative initial position of the rigid members (30, 31) of each tie (29) the centers of the main balls (41) connecting each tie (29) to the two correspondind blades and the center of the secondary articulated connection (44) of each tie (29) to the corresponding arm (37) of the members making the connection (35) to the two corresponding blades are substantially aligned on the longitudinal axis of the tie (29).

5. A rotor head as claimed in claim 4, characterized in that the connection member (35) has the shape of a V open toward the hub (1), with the free end of one of the arms (37) in the form of a pivot clevis (40) on the adjacent end of a tie (29), the pivoting axis of the clevis (40) on the end of the arm (37) being parallel to the lag axis of the corresponding blade.

6. A rotor head as claimed in claim 5, characterized in that a connection eye (33) fastened to one (30) of the rigid members of a tie (29) is engaged and retained between the two branches of an end clevis (40) of an arm (37) of a connection member (35), whose other arm (36) has an end piece (39) engaged in and fastened to the two branches of a connection clevis (34) fastened to at least one other rigid member (31) of a neighboring tie (29).

7. A rotor head as claimed in claim 6, characterized in that said connection eye (33) of a tie (29) is retained in the end clevis (40) of an arm (37) of a connection member (35) by a secondary ball of laminated elastomer (44).

8. A rotor head as claimed in claim 1, characterized in that the means for the articulated connection of each of two neighboring ties (29') on one and the same blade (45) comprise a respective one of two main balls (41a, 41b) disposed on the corresponding connection member (13') symmetrically, one on each side of the pitch change axis (X-X) of the blade, each of these balls (41a, 41b) being connected to the tie (29') situated on the same side of the pitch change axis (X-X) as the ball in question by means of a ball eye (38', 40') surrounding the ball in question (41a, 41b) and separated from the other ball eye only by a slight transverse clearance at right angles to the pitch change axis (X-X) of the blade (45).

9. A rotor head as claimed in claim 1, characterized in that the means for the articulated connection of each of two neighboring ties (89) on one and the same blade comprise a respective one of two mains balls (101a, 101b) disposed on the corresponding connection member (73) in positions radially offset along the pitch change axis (X-X) of the blade, each of these balls (101a, 101b) being connected to a respective one of said neighboring ties (89) by ball eye (98, 100) surrounding it.

10. A rotor head as claimed in claim 9, characterized in that said main balls (101a, 101b) are radially offset along the pitch change axis (X-X) of the blade and are each centered on said axis.

11. A rotor head as claimed in claim 9, characterized in that the main ball (101b) connecting one end (93) of each tie (89) to the member (73) connecting a blade to the hub (61) is radially on the outside of the other main ball (101a) held on the member (73) connecting the blade to the hub (61), while the main ball (101a) connecting the other end of the tie (89) to the member (73) connecting a neighboring blade to the hub (61) is radially on the inside of the other main ball (101b) held on the member connecting the neighboring blade to the hub.

12. A rotor head as claimed in claim 8, characterized in that one ball eye (100) held on a connection member (73), connecting a blade to the hub (61), by one (101b) of the two corresponding main balls is directly fastened to at least one (90) of the two rigid members (90, 91) of the tie (89) articulated on said connection member (73) by the corresponding main ball (101b).

13. A rotor head as claimed in claim 8, characterized in that at least one ball eye (98) held on a member (73) connecting a blade to the hub (61) by one (101a) of the two corresponding main balls has a connection arm (96) fastened to at least one rigid member (91) of the tie (89) connected to said connection member (73) by the corresponding main ball (101a).

14. A rotor head as claimed in claim 1, characterized in that each tie (29) comprises an elongated central rigid plane plate (30) engaged at least partially between two external rigid plane plates (31), which are elongated in the same direction and to each of which the central plate (30) is connected by a layer of a viscoelastic material (31) bonded to the two plates connected together by it, the central plate (30) being provided with an end piece having a pivot eye (33) extending on one side, in the direction of the elongated plates (30, 31), beyond the outer plates (31), while the latter have on the other side in the direction of the elongated plates, and beyond the inner plate (30), a clevis (34) for fastening by means of at least two bolts to an end piece (39) of an arm (36) making the connection to a main ball (38), each tie (29) being mounted between two blades in such a manner that the plane of the plates (30, 31) is substantially parallel to the lag axes of the two blades.

15. A rotor head as claimed in claim 1, characterized in that each member (13) connecting a blade to the hub (1) carries, radially one the inside of each main ball (41) held by it, two feet (21, 23) projecting laterally relative to the connection member (13) and extending in the one case on one side and in the other case on the other side of the pitch change axis (X-X) of the corresponding blade, each of these two lateral feet (21, 23) having a stop surface (22, 24) facing the hub (1) and intended to come to bear against one of two lag stop surfaces (22, 24) which are directed towards the outside of the hub (1) and towards the end of the corresponding blade, and each of which is provided on a respective one of two projecting bosses on the outer radial face of the hub (1) and laterally on each side of said connection member (13) and of the corresponding articulation means (6), on order to limit the lag deflections of the blade on the starting and stopping of the rotation of the rotor, through the direct bearing of the stop surface (22, 24) of a lateral foot (21, 23) against a lag stop surface (27, 28) of the hub (1).

16. A rotor head as claimed in claim 15, characterized in that one of the two lateral feet (21, 23) of each connection member (13) is extended laterally beyond the corresponding stop surface (24) and is shaped as a lever (23) controlling the pitch of the corresponding blade.

17. A rotor head as claimed in claim 1, characterized in that each member connecting a blade to the hub (1) is a radial clevis (13) comprising an upper branch (14a) and a lower branch (14b), which are disposed facing one another and are spaced apart in the direction of the lag axis of the corresponding blade, and the outer radial ends (17a, 17b) of which are integral with the corresponding blade root, which is forked, or retain between them the root of the corresponding blade, while their inner radial ends are fastened to an inner radial frame (9) of the means (6) effecting the articulation on the hub (1), which means also have an outer radial frame (8) fixed on a part (2) of the hub (1) and disposed between the two branches (14a, 14b) of the clevis (13), each of the corresponding main balls (41) being retained and substantially housed between the two branches (14a, 14b) of the clevis (13) radially between their outer radial ends and the outer radial frame (8) which is also disposed between them.

18. A rotor head as claimed in claim 17, characterized in that each main ball (41) is on the one hand housed between two bosses (43) projecting towards one another on the face of a respective one of the branches (14a, 14b) of the clevis (13) which faces the other branch, and on the other hand is retained by a diametrical pin (42) whose axis is parallel to the lag axis of the blade and which passes through the ball (41) and the bosses (43) and is fixed on the two branches (14a, 14b).

19. A rotor head as claimed in claim 17, as attached to claim 8, characterized in that each main ball (141a, 141b) is housed in a part (143) mounted as a brace between the two branches (114a, 114b) of the clevis (113) and having at least one ball socket (114a, 114b) which opens laterally towards one side of the clevis (113) and towards the hub and in which a main ball (141a, 141b) is retained about a diametrical axis (142a, 142b) at right angles to the lag axis of the blade and substantially at right angles to the longitudinal axis of the tie (129) which this ball (141a, 141b) connects to the clevis (113).

20. A rotor head as claimed in claim 19, characterized in that each of the two main balls (141a, 141b) is received and retained in a respective one of two separate parts mounted as braces between the two branches (114a, 114b) of the clevis (113).

21. A rotor head as claimed in claim 17, as attached to claim 15, characterized in that the two lateral feet (21, 23) provided with the stop surfaces (22, 24), and where applicable with the pitch control lever, are made as a single piece (19), which is mounted as a brace between the branches (14a, 14b) of the clevis (13), to which branches it is fixed in a radial position between the main ball or balls (41) and that part (2) of the hub (1) to which the outer radial frame (8) of the corresponding articulation means (6) is fixed.

22. A rotor head as claimed in claim 1, which comprises a hub (1) provided with a rigid peripheral rim (2) of circular or substantially polygonal shape, the side or apices of which are rounded and which is fixed for rotation with a rotor-mast unit about the axis of rotation (A) of the rotor, and characterized in that said articulation means of each member (13) connecting a blade to the hub (1) are substantially housed inside the rim (2) and connect said connection member (13) to a part of said rim (2) of the hub (1).

23. A rotor head as claimed in claim 22, which comprises an integrated tubular hub-mast unit (51) having said rim (52) in its top portion and being provided for each blade (45) with at least one opening (54) formed in the hub-mast unit (51) in a position substantially adjacent the rim (52), while a part of the corresponding connection member (13) passes through said opening in order to connect the blade (45), outside the hub-mast unit (51), to the corresponding articulation means (6), inside the hub-mast unit (51).

24. A rotor head as claimed in claim 22, which is provided with a top curved fairing (55) covering the upper part of the hub (51), and having cavities (56) for the passage of the means (13') connecting the blades to the hub (51), said fairing (55) preferably being mounted floating on the ring of ties (29) and being connected by silentblocs (58) at its periphery to arms (36') connecting ties (29) to the corresponding main balls (41).

25. A rotor head as claimed in claim 1, which comprises a hub having a substantially radial plate (62) of substantially circular or substantially polygonal shape, which has rounded sides or apices and which is fixed for rotation with a rotor-mast unit about the axis of rotation (A) of the rotor, the plate (62) having formed in it a number of cavities (65) equal to the number of blades, while the articulation means (66) of the member (73) connecting a blade to the hub (61) are at least partially housed in the corresponding cavity (65) and bear against the outer radial edge (64) of said cavity (65), being connected to the blade by a top part (74a) and a bottom part (74b) of said connection member (73), said parts extending respectively above and below the plate (62).

26. A rotor head as claimed in claim 1, which comprises a hub having two substantially radial plates (151, 152) fixed for rotation with a rotor-mast unit about the axis of rotation of the rotor and spaced apart in the direction of the axis of rotation of the rotor, so that for each blade they have two outer radial plate parts (151, 152) facing one another, between which are retained the articulation means (156) of the corresponding member (163) making the connection to the hub, as well as at least an inner radial part of said connection member (163).

27

FIG. 1

FIG. 2

FIG. 4

FIG. 3

FIG.5

FIG.6

FIG.7

FIG.8

FIG.9

EP 0 340 095 B1